# EUROPEAN PATENT SPECIFICATION

(11) **EP 4 509 379 B1**
(45) Date of publication and mention of the grant of the patent: **25.02.2026**
(21) Application number: 24192057.8
(22) Date of filing: 31.07.2024
(51) Int. Cl.: B60W 50/08

(54) **LEANING VEHICLE AND METHOD FOR CONTROLLING THE LEANING VEHICLE**
NEIGEFAHRZEUG UND VERFAHREN ZUR STEUERUNG DES NEIGEFAHRZEUGS
VÉHICULE À INCLINAISON ET PROCÉDÉ DE COMMANDE DU VÉHICULE À INCLINAISON

(30) Priority: 02.08.2023 JP 2023126143
(43) Date of publication of application: 19.02.2025
(73) Proprietor: Yamaha Hatsudoki Kabushiki Kaisha, Iwata-shi, Shizuoka 438-8501 (JP)
(72) Inventor: Fukushima, Kenji, Iwata-shi, Shizuoka, 438-8501 (JP)
(74) Representative: Grünecker Patent- und Rechtsanwälte PartG mbB

(56) References cited:
- EP-A2- 2 233 388
- DE-A1- 102004 020 420
- DE-A1- 102006 059 058
- DE-A1- 102007 011 054
- US-A1- 2012 185 135
- HONDA HONDA: "AFRICA TWIN OWNER'S MANUAL", HONDA WEBSEITE, 31 December 2019 (2019-12-31), pages 1 - 377, XP093232021, Retrieved from the Internet <URL:chrome-extension://efaidnbmnnnibpcajpcglclefindmkaj/https://www.honda.co.uk/motorcycles/owners/documentation/owners-manuals/_jcr_content/headerPar/textcolumnwithimagem/textColumn/richtextdownload/file.res/CRF1100%2021YM%20Owners%20Manual.pdf> [retrieved on 20241206]

## Description

The present invention relates to a leaning vehicle.

Honda's "Africa Twin Owner's Manual" 31.12.2019 refers to a motorcycle as a leaning vehicle having a vehicle body, an engine disposed in the vehicle body and a stepped transmission having plural gear stages, which are selectable. The stepped transmission is configured to change a rotation speed outputted from the engine in accordance with a selected gear stage. A gear shift actuator is configured to cause the stepped transmission to change the gear stage. A gear shift manipulation part is disposed in the vehicle body. The gear shift manipulation part is configured to receive a manipulation for selecting a gear stage. A status switch manipulation part is disposed in the vehicle body. The status switch manipulation part is configured to receive a manipulation for switching a gear shift status. A control device is configured to switch the gear shift status of the leaning vehicle between an automatic gear shift status and a manual gear shift status in accordance with a manipulation on the status switch manipulation part. The control device is configured to, in the automatic gear shift status, cause the gear shift actuator to shift up or down the gear stage of the stepped transmission in accordance with a traveling state, and in the manual gear shift status, shift up or down the gear stage in accordance with a manipulation on the gear shift manipulation part. The leaning vehicle including a mode transition manipulation part disposed in the vehicle body. The mode transition manipulation part is configured to receive a manipulation for selecting a riding mode with which an output control characteristic of the engine is associated. The control device is configured to select the riding mode in accordance with a manipulation on the mode transition manipulation part. Moreover, the prior art document US 2012/0185135 A1 discloses a comparable control system that is applicable for vehicles like cars.

Moreover, JP 2014-035066 A shows a straddled vehicle including a stepped electric transmission, as an example of a leaning vehicle. This vehicle includes a clutch actuator and a shift actuator. In response to a gear shift command, which is involved in a rider's manipulation on a shift-up switch or on a shift-down switch, the clutch actuator and the shift actuator operate to switch a gear stage. JP 2014-035066 A also describes that the gear shift command may be outputted in response to a control device detecting an engine rotation speed.

It is the object of the present teaching to provide a leaning vehicle and a method for controlling a leaning vehicle in which it is possible to provide driving characteristics that finely respond to traveling environments and a rider's request in a situation where the rider seeks a positive manipulation, and at the same time provide driving characteristics that are close to a request while suppressing a manipulation amount in a situation where the rider seeks to omit a manipulation.

According to the present teaching said object is solved by a leaning vehicle having the features of independent claim 1. Moreover, according to the present teaching said object is also solved by a method for controlling a leaning vehicle having the features of independent claim 9. Preferred embodiments are laid down in the dependent claims.

In consideration of the present teaching switching of driving characteristics both in a situation where a rider seeks a positive manipulation and in a situation where the rider seeks to omit a manipulation may be taken into consideration.

A leaning vehicle turns in a leaning posture by leaning in vehicle left direction while turning left, and leaning in vehicle right direction while turning right. The leaning vehicle, to counteract a centrifugal force acting thereon when turning in a curve, turns in a posture in which the leaning vehicle leans toward the center of the curve. Behaviors of the leaning vehicle are controlled with a rider's positive manipulation, such as weight shifting. The behaviors of the leaning vehicle, including its leaning posture, are also influenced by an engine output or by a gear stage. The rider of the leaning vehicle, as compared to a driver of an automobile for example, can take a more positive manipulation to control the behaviors of the vehicle so as to respond to environments in which the vehicle is traveling and a rider's request on traveling.

A rider, who is driving a leaning vehicle including a stepped transmission configured to have its gear stage automatically switched in accordance with an engine rotation speed, can omit a manipulation for gear shift (hereinafter referred to as an automatic gear shift status or an AT status). This allows the rider to enjoy a reduction of manipulations in driving the leaning vehicle. This also allows the rider to be more attentive to manipulations other than the gear shift.

In some case, however, the rider may desire to perform a positive gear shift manipulation to switch the gear stage so as to finely suit traveling environments and a request on traveling (hereinafter referred to as a manual gear shift status or an MT status). In some other case, the rider may desire to switch engine control characteristics of the leaning vehicle in accordance with a rider's request on traveling and traveling environments such as dirt or wet/dry of a road surface. In other words, it may sometimes be desired in the leaning vehicle that the engine control characteristics are switched in accordance with traveling environments of the leaning vehicle and a rider's request on traveling. It may also sometimes be desired in the leaning vehicle that a status having automatic gear shift in accordance with the engine rotation speed and a status requiring the rider to perform a positive gear shift manipulation are selectively switchable.

As described above, in the leaning vehicle that is controlled with a rider's positive manipulation, it may sometimes be desired that the engine control characteristics are switched in accordance with traveling environments and a request on traveling, even in the automatic gear shift status in which a rider's gear shift manipulation can be omitted.

In the leaning vehicle, however, the automatic gear shift is often selected in a case where the rider desires to control behaviors of the leaning vehicle with a smaller amount of manipulations or to be more attentive to manipulations other than the gear shift. In such a case, a smaller amount of manipulations are preferred when switching the engine control characteristics, too.

On basis of the present teaching and with the above-described knowledge about manipulations peculiar to the leaning vehicle, providing driving characteristics that finely respond to traveling environments and a rider's request in a situation where the rider seeks a positive manipulation, and at the same time providing driving characteristics that are close to a rider's request in a situation where the rider seeks to omit a manipulation can be taken into consideration.

Accordingly, it can be devised, in the manual gear shift status, a configuration in which an engine mode is selected from among plural selectable MT engine mode options in accordance with a manipulation on a mode transition manipulation part. Moreover, it can be devised, in the automatic gear shift status, a configuration in which plural AT engine mode options are prepared in such a manner that the number of times a manipulation needs to be performed in order to transition of the engine mode is smaller as compared to that in the manual gear shift status. Thus, the leaning vehicle, in the manual gear shift status in which a gear shift manipulation is required, can switch the gear stage so as to finely respond to traveling environments and a rider's request, and can travel with engine control characteristics that finely respond to a rider's request. The leaning vehicle, in the automatic gear shift status in which a gear shift manipulation can be omitted, can select control characteristics that are close to a rider's request, while suppressing the amount of manipulation.

Accordingly, it is possible to provide driving characteristics that more finely respond to traveling environments and a rider's request in a situation where the rider seeks a positive manipulation, and at the same time provide driving characteristics that are close to a request while suppressing a manipulation amount in a situation where the rider seeks to omit a manipulation.

Accordingly, to attain the aim described above, a leaning vehicle according to an aspect of the present teaching has the following configuration.
(1) A leaning vehicle including:
   a vehicle body;
   an engine disposed in the vehicle body;
   a stepped transmission having plural gear stages, which are selectable, the stepped transmission being configured to change a rotation speed outputted from the engine in accordance with a selected gear stage;
   a gear shift actuator configured to cause the stepped transmission to change the gear stage;
   a gear shift manipulation part disposed in the vehicle body, the gear shift manipulation part being configured to receive a manipulation for selecting a gear stage;
   a status switch manipulation part disposed in the vehicle body, the status switch manipulation part being configured to receive a manipulation for switching a gear shift status; and
   a control device configured to switch the gear shift status of the leaning vehicle between an automatic gear shift status and a manual gear shift status in accordance with a manipulation on the status switch manipulation part, the control device being configured to, in the automatic gear shift status, cause the gear shift actuator to shift up or down the gear stage of the stepped transmission in accordance with a traveling state, and in the manual gear shift status, shift up or down the gear stage in accordance with a manipulation on the gear shift manipulation part,
   the leaning vehicle including a mode transition manipulation part disposed in the vehicle body, the mode transition manipulation part being configured to receive a manipulation for selecting an engine mode with which an output control characteristic of the engine is associated,
   the control device being configured to select the engine mode in accordance with a manipulation on the mode transition manipulation part, the engine mode associated with the output control characteristics, the control device being configured to, in the manual gear shift status, select the engine mode from among plural selectable MT engine mode options while a transition from one to another of the plural selectable MT engine mode options is taking place in accordance with a manipulation on the mode transition manipulation part, and in the automatic gear shift status in which the gear stage is shifted up or down in accordance with the traveling state, select the engine mode from among plural AT engine mode options while a transition from one to another of the plural AT engine mode options is taking place in accordance with a manipulation on the mode transition manipulation part, the plural AT engine mode options being prepared in such a manner that the number of times a manipulation needs to be performed in order to transition to any of the plural AT engine mode options is smaller as compared to that in the manual gear shift status.

In the leaning vehicle of (1), the gear shift status of the stepped transmission is switched between the automatic gear shift status and the manual gear shift status in accordance with a manipulation on the status switch manipulation part. The engine mode, with which output control characteristics of the engine are associated, is selected in accordance with a manipulation on the mode transition manipulation part. Any of the mode transition manipulation part, the gear shift manipulation part, and the status switch manipulation part is disposed in the vehicle body. In the manual gear shift status, an option selected as the engine mode transitions among the plural MT engine mode options in accordance with a manipulation on the mode transition manipulation part. In the automatic gear shift status, on the other hand, an option selected as the engine mode transitions among the plural AT engine mode options in accordance with a manipulation on the mode transition manipulation part. The engine mode is selected in this manner. In the automatic gear shift status, the number of times a manipulation needs to be performed in order to select any of the plural AT engine mode options is smaller as compared to selection in the manual gear shift status.

Thus, it is possible to, in a situation where the rider seeks a positive gear shift manipulation, switch the gear stage so as to finely respond to traveling environments and a rider's request while obtaining output control characteristics that finely respond to a rider's request, and in a situation where a gear shift manipulation can be omitted, select output control characteristics that are close to a rider's request while suppressing the amount of manipulation.

Accordingly, it is possible to provide driving characteristics that more finely respond to traveling environments and a rider's request in a situation where the rider seeks a positive manipulation, and at the same time provide driving characteristics that are close to a request while suppressing a manipulation amount in a situation where the rider seeks to omit a manipulation.

In an aspect of the present teaching, the leaning vehicle may adopt the following configuration.

(2) The leaning vehicle according to (1), wherein
the control device, in the automatic gear shift status, selects the engine mode from among the plural AT engine mode options in accordance with a manipulation on the mode transition manipulation part, the number of the plural AT engine mode options being not less than 1/3 of the number of the plural MT engine mode options, the number of the plural AT engine mode options being different from the number of the plural MT engine mode options by not less than 1/6 of the number of the plural MT engine mode options.

According to (2), in the automatic gear shift status, the engine mode can be selected from among the plural AT engine mode options, the number of which is not less than 1/3 of the number of the plural MT engine mode options, while the rider's manipulation amount is suppressed as compared to in the manual gear shift status. Accordingly, in the automatic gear shift status, output control characteristics that are close to a rider's request can be selected while the amount of manipulation is suppressed to such an extent that the rider can physically experience the suppression, as compared to in the manual gear shift status.

In an aspect of the present teaching, the leaning vehicle may adopt the following configuration.

(3) The leaning vehicle according to (1) or (2), wherein
the control device associates, with at least one option belonging to plural MT engine mode options and with at least one option belonging to plural AT engine mode options, output control characteristics that are picked out by a rider's manipulation from among plural potential output control characteristics each corresponding to each of different control characteristics.

According to (3), output control characteristics that are close to traveling environments and a rider's request can be associated in advance with at least one of the plural MT engine mode options and with at least one of the plural AT engine mode options. This makes it possible that output control characteristics that are picked out in advance from among a variety of potential output control characteristics are easily selected as the engine mode, both in the manual gear shift status and in the automatic gear shift status. Moreover, even when the engine mode has to be selected from limited AT engine mode options, output control characteristics that are picked out in advance from among a variety of potential output control characteristics can be selected. Accordingly, it is possible to provide driving characteristics that more finely respond to traveling environments and a rider's request.

In an aspect of the present teaching, the leaning vehicle may adopt the following configuration.

(4) The leaning vehicle according to any one of (1) to (3), wherein
the control device changes a gear shift map in accordance with the engine mode that is selected in accordance with a manipulation on the mode transition manipulation part in the automatic gear shift status, the gear shift map being a condition for causing the gear shift actuator to change the gear stage of the stepped transmission in the automatic gear shift status.

According to (4), the gear shift map is changed in accordance with a change of the engine mode. This makes it possible to provide driving characteristics that further finely respond to traveling environments and a rider's request, including so-called shift characteristics in the automatic gear shift status.

In an aspect of the present teaching, the leaning vehicle may adopt the following configuration.

(5) The leaning vehicle according to any one of (1) to (4), wherein
the control device, in the automatic gear shift status, selects the engine mode from among two AT engine mode options in accordance with a manipulation on the mode transition manipulation part.

According to (5), the number of AT engine mode options is two. Thus, when the rider desires to change the engine mode in the automatic gear shift status, a transition to a desired engine mode can be obtained by manipulating the mode transition manipulation part only once. Accordingly, driving characteristics that are close to a request can be provided while the manipulation amount is further suppressed in the automatic gear shift status in which the rider seeks to omit a manipulation.

In an aspect of the present teaching, the leaning vehicle may adopt the following configuration.

(6) The leaning vehicle according to any one of (1) to (5), wherein
the control device, when switching the gear shift status of the leaning vehicle from the automatic gear shift status to the manual gear shift status in accordance with a manipulation on the status switch manipulation part, constrains the engine mode to, from among plural MT engine mode options selectable in the manual gear shift status, an option excluding an option with which output control characteristics that give the largest output are associated.

According to (6), a situation can be suppressed in which the output control characteristics are set largest by the manipulation of switching the gear shift status from the automatic gear shift status to the manual gear shift status.

In an aspect of the present teaching, the leaning vehicle may adopt the following configuration.

(7) The leaning vehicle according to any one of (1) to (6), wherein
the control device, in the automatic gear shift status, stores a high frequency AT mode having the highest frequency of use among the plural AT engine mode options, and upon the automatic gear shift status being selected for the first time after turn-on of power, selects the stored high frequency AT mode as an initial value of the engine mode.

According to (7), upon the automatic gear shift status being selected for the first time after turn-on of the power, an engine mode most frequently used in previous drivings actually performed is set as an initial value, and therefore it is possible to provide driving characteristics that are close to a rider's request, while providing more suppression of the rider's manipulation amount.

In an aspect of the present teaching, the leaning vehicle may adopt the following configuration.

(8) The leaning vehicle according to any one of (1) to (7), wherein
the control device, in the manual gear shift status, stores a high frequency MT mode having the highest frequency of use among the plural MT engine mode options, and upon the manual gear shift status being selected for the first time after turn-on of power, selects the stored high frequency MT mode as an initial value of the engine mode.

According to (8), upon the manual gear shift status being selected for the first time after turn-on of the power, an engine mode most frequently used in previous drivings actually performed is set as an initial value, and therefore it is possible to provide driving characteristics that are close to a rider's request, while providing more suppression of the rider's manipulation amount.

The leaning vehicle is a vehicle that turns in a leaning posture by leaning in vehicle left direction while turning left, and leaning in vehicle right direction while turning right. The leaning vehicle belongs to a straddled vehicle, which has a saddle on which the driver sits astride. Examples of the leaning vehicle encompass a motorcycle. The leaning vehicle is not limited to the motorcycle, and may be, for example, a three-wheeled motor vehicle or the like. The three-wheeled motor vehicle may include two front wheels and one rear wheel, or alternatively may include one front wheel and two rear wheels. Driving characteristics of the leaning vehicle include engine output characteristics and gear stage change characteristics.

The engine is an internal combustion engine. The engine outputs a driving force for driving the wheels. The engine encompasses a single-cylinder engine and an engine having two or more cylinders. The engine, which has an output shaft, generates a driving force through combustion, and outputs the driving force in the form of a torque and a rotation speed of the output shaft. The rotation speed of the engine is, more specifically, a rotation speed of the output shaft. The engine has, for example, an electric throttle valve for controlling the amount of air to be supplied, and a fuel injection device.

The stepped transmission is a stepped transmission having plural gear stages. The stepped transmission is of a gear type. Set to the plural gear stages are different gear ratios. The gear ratio is the ratio between the rotation speed of an input shaft of the stepped transmission and the rotation speed of an output shaft of the stepped transmission. In the stepped transmission, as the gear stage is switched, the gear ratio is discontinuously changed. The stepped transmission is of a sequential shift type. By one switching operation, the gear stage is shifted up or down by one gear. The stepped transmission is a dog-type transmission, for example. The stepped transmission does not include a CVT, for example. The stepped transmission does not include a planetary gear type transmission, for example.

The gear shift actuator is an electric motor or an electric solenoid, for example. The gear shift actuator causes the stepped transmission to operate without using a hydraulic pressure, for example.

The gear shift manipulation part receives a manipulation for selecting a gear stage. If, for example, the gear shift manipulation part is a switch disposed at a foot pedal or a handlebar of the vehicle body, it is possible to promptly manipulate the gear shift manipulation part in accordance with a change of the rider's request. The gear shift manipulation part is not particularly limited, and may be attached to a part of the vehicle body other than the handlebar or the foot pedal, for example. The gear shift manipulation part is, for example, a button type switch, a lever type switch, or a slide switch.

The mode transition manipulation part receives a manipulation for selecting an engine mode. If, for example, the mode transition manipulation part is attached to the handlebar of the leaning vehicle, it is possible to promptly manipulate the mode transition manipulation part in accordance with a change of traveling environments and a change of the rider's request, even while the leaning vehicle is traveling. The mode transition manipulation part is not particularly limited, and may be attached to a part, such as a speedometer or a tank, of the vehicle body other than the handlebar. The mode transition manipulation part is, for example, a button type switch, a lever type switch, or a slide switch.

The selection of the engine mode is carried out in accordance with a rider's manipulation on the mode transition manipulation part. For example, each time the mode transition manipulation part is manipulated once, one of options is selected after another as an object. The selection object transitions as if circulating through the options. The manipulation for selecting is not particularly limited, and it may be possible that, for example, a group of options is firstly selected, and then the object is selected from among the options belonging to the group.

The number of times a manipulation needs to be performed in order to transition to any of the plural AT engine mode options being smaller as compared to that in the manual gear shift status means that the number of AT engine mode options is smaller than the number of MT engine mode options.

The status switch manipulation part receives a manipulation for switching the gear shift status between the automatic gear shift status and the manual gear shift status. If, for example, the status switch manipulation part is attached to the handlebar of the leaning vehicle, it is possible to promptly manipulate the manipulation part in accordance with a change of traveling environments and a change of the rider's request, even while the leaning vehicle is traveling. The status switch manipulation part is not particularly limited, and may be attached to a part, such as a speedometer or a tank, of the vehicle body other than the handlebar. The status switch manipulation part is, for example, a button type switch, a lever type switch, or a slide switch.

The control device controls the engine output based on output control characteristics associated with the engine mode selected in accordance with a manipulation on the mode transition manipulation part.

The control device has a section for controlling the gear shift actuator, and a section for controlling the engine output. The section for controlling the gear shift actuator and the section for controlling the engine output may be arranged at physically separate positions, or may be arranged integrally. The section for controlling the engine output may be disposed outside the control device for controlling the gear shift actuator, and may be disposed outside the control device for selecting the engine mode in accordance with a manipulation on the mode transition manipulation part.

The control device may further include a section for controlling a clutch actuator. The control device has, for example, a processor for executing a command, and a storage section for storing the command. The control device is not particularly limited, and may be configured as a circuit including no processor, for example.

The engine control characteristics or the output control characteristics are accelerator-manipulation/throttle-opening-degree characteristics, for example. That is, the engine output control characteristics are characteristics of an engine output in response to the accelerator manipulation amount.

The gear shift status is either the automatic gear shift status or the manual gear shift status. Shifting up or down the gear stage means not that an operation for an increase and an operation for a reduction are simultaneously performed, but that both the operation for an increase and the operation for a reduction are possible.

The traveling state is, for example, the engine rotation speed. The traveling state is not particularly limited, and may be the moving speed of a member that operates in conjunction with the engine, for example. The moving speed of a member that rotates in conjunction with the engine is the rotation speed of a clutch, the stepped transmission, a sprocket, or the wheel, for example. The moving speed of the member that rotates in conjunction with the engine is not particularly limited, and may be the traveling speed of the leaning vehicle, for example.

The number of AT engine mode options being not less than 1/3 of the number of MT engine mode options and the number of AT engine mode options being different from the number of MT engine mode options by not less than 1/6 of the number of MT engine mode options means that the number of AT engine mode options is 1/3 or more and 5/6 or less of the number of MT engine mode options.

The present teaching is not particularly limited, and for example, it may be acceptable that the number of AT engine mode options is less than 1/3 of the number of MT engine mode options. It may also be acceptable that the number of AT engine mode options is more than 5/6 of the number of MT engine mode options.

The gear shift map indicates a reference based on which the control device changes the gear stage. The gear shift map is, for example, a reference for the engine rotation speed. That is, the gear shift map is data on the engine rotation speed at which the gear stage is changed, for example. The type of a condition indicated by the gear shift map is not particularly limited, and may be, for example, the rotation speed of a component part that rotates in conjunction with the engine, or the traveling speed of the vehicle. The gear shift map may include a reference different from speeds. The gear shift map may be, for example, a composite reference composed of the rotation speed and the accelerator manipulation amount.

The turn-on of the power means that, for example, a main switch of the leaning vehicle is manipulated so that electricity is supplied to the control device. A trigger of the turn-on of the power is not particularly limited, and may be turn-on of the control device for controlling the gear shift actuator, for example.

The association of output control characteristics that are picked out from among the plural potential output control characteristics with an option belonging to the MT engine mode options or the AT engine mode options is, for example, carried out as pre-setting that precedes the selection of the engine mode from among the MT engine mode options or the AT engine mode options.

The number of variations of the plural potential output control characteristics may sometimes be larger than that of the MT engine mode options or that of the AT engine mode options. The potential output control characteristics may sometimes be pre-set as a complicated factor in which they are combined with the intensity of intervention of a traction control or the intensity of operation of an engine brake. The association of output control characteristics that are picked out from among the plural potential output control characteristics with an option belonging to the MT engine mode options or the AT engine mode options is carried out as pre-setting in accordance with a manipulation on plural switches, for example. On the other hand, the selection of the engine mode from among the MT engine mode options or the AT engine mode options is carried out while a transition from one to another of plural options is taking place in accordance with a manipulation, for example. This is why the selection of the engine mode from among the MT engine mode
options or the AT engine mode options is carried out as selection in accordance with a manipulation on a single switch, for example.

Here, the association of output control characteristics that are picked out from among the plural potential output control characteristics is not particularly limited, and may be carried out as selection in accordance with a manipulation on a single switch, for example. The selection of the engine mode from among the MT engine mode options or the AT engine mode options is not particularly limited, either, and may be carried out as selection in accordance with a manipulation on plural switches, for example.

The present teaching can provide a leaning vehicle in which it is possible to provide driving characteristics that finely respond to traveling environments and a rider's request in a situation where the rider seeks a positive manipulation, and at the same time provide driving characteristics that are close to a request while suppressing a manipulation amount in a situation where the rider seeks to omit a manipulation.

### Brief Description of Drawings

[FIG. 1] FIG. 1(A) schematically shows a leaning vehicle according to first embodiment. FIG. 1(B) is a chart showing engine modes that can be selected in the leaning vehicle of FIG. 1(A).
[FIG. 2] A flowchart illustrating a process by a control device
[FIG. 3] A chart showing engine modes that can be selected in a leaning vehicle according to second embodiment
[FIG. 4] A chart showing engine modes that can be selected in a leaning vehicle according to third embodiment
[FIG. 5] A chart showing engine modes that can be selected in a leaning vehicle according to fourth embodiment
[FIG. 6] A chart showing engine modes that can be selected in a leaning vehicle according to fifth embodiment
[FIG. 7] A chart showing engine modes that can be selected in a leaning vehicle according to sixth embodiment
[FIG. 8] A chart showing engine modes that can be selected in a leaning vehicle according to seventh embodiment

### Description of Embodiments

In the following, leaning vehicles according to some embodiments of the present teaching will be described with reference to the drawings. The embodiments described below are just examples. The interpretation of the present teaching should not be limited in any way by the embodiments described below.

### [First Embodiment]

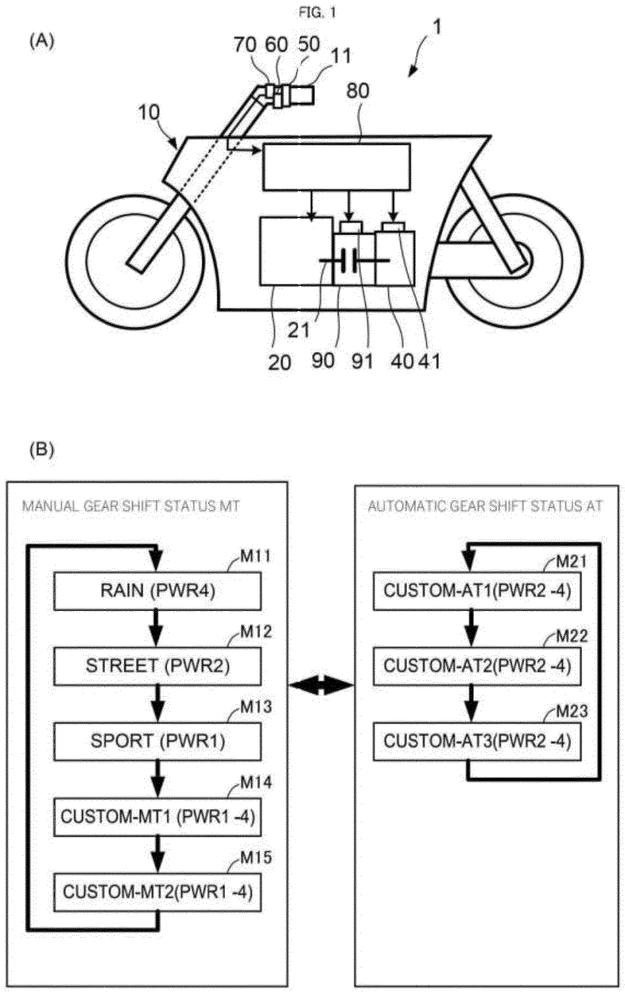

FIG. 1(A) schematically shows a leaning vehicle according to first embodiment.

A leaning vehicle 1 includes a vehicle body 10, an engine 20, a stepped transmission 40, a gear shift actuator 41, a gear shift manipulation part 50, a status switch manipulation part 60, a mode transition manipulation part 70, and a control device 80.

The leaning vehicle 1 also includes a clutch 90, a clutch actuator 91, and an accelerator operator 11.

The engine 20 is disposed in the vehicle body 10. The engine 20 is a power source of the leaning vehicle 1. The engine 20 is provided with a throttle valve and a fuel injection device (both not shown). The engine 20 outputs power in the form of rotation of an output shaft 21.

The stepped transmission 40 has plural gear stages, which are selectable. The stepped transmission 40 changes, in accordance with the ratio of a gear stage, the speed of rotation outputted from the engine 20. The gear stages include a neutral stage and plural stages starting with a first gear. The gear stages include the neutral stage, and first to sixth gears, for example. The stepped transmission 40 changes, in accordance with the ratio of a selected gear stage, the speed of rotation outputted from the engine 20. If the neutral is selected, the output from the engine 20 is disconnected.

The stepped transmission 40 is of an electric-powered type. The gear stage of the stepped transmission 40 is changed electrically. The gear shift actuator 41 is an electric actuator, which operates in accordance with a control by the control device 80. The gear shift actuator 41 causes the stepped transmission 40 to change the gear stage. The gear stage of the stepped transmission 40 is changed electrically, instead of by a force of a rider's manipulation.

The clutch 90 disconnects or connects power transfer between the engine 20 and the stepped transmission 40. The clutch 90 is of an electric-powered type. The clutch actuator 91 is an electric actuator, which operates in accordance with a control by the control device 80. A state of the clutch 90 is changed electrically, instead of by a force of a rider's manipulation.

The gear shift manipulation part 50 receives, from the rider, a manipulation for selecting a gear stage. The gear shift manipulation part 50 is disposed in the vehicle body 10. The gear shift manipulation part 50 is a shift-up switch and a shift-down switch, for example. The gear shift manipulation part 50 is disposed at a handlebar or a pedal of the vehicle body 10, for example. The gear shift manipulation part 50 may be disposed at both the handlebar and the pedal.

The status switch manipulation part 60 receives, from the rider, a manipulation for switching a gear shift status. The gear shift status has an automatic gear shift status AT and a manual gear shift status MT. In accordance with a rider's manipulation on the status switch manipulation part 60, the gear shift status of the leaning vehicle 1 switches between the automatic gear shift status AT and the manual gear shift status MT. The status switch manipulation part 60 is disposed in the vehicle body 10. The gear shift manipulation part 50 is, for example, a gear shift mode switch disposed at the handlebar of the vehicle body 10.

The automatic gear shift status AT is a status in which the gear stage of the stepped transmission 40 is automatically shifted up or down in accordance with a traveling state. That is, the automatic gear shift status AT is a status in which the gear stage is automatically shifted up or down without a rider's gear shift manipulation. Here, the gear stage in the automatic gear shift status AT may be set so as to not only be automatically shifted up or down but also be forcibly shifted up or down by a manipulation on the status switch manipulation part 60. The automatic gear shift status AT is a status in which the gear stage is automatically shifted up in accordance at least with the traveling state.

The manual gear shift status MT is a status in which the gear stage of the stepped transmission 40 is shifted up or down in accordance with a rider's manipulation on the gear shift manipulation part 50. Here, to suppress a stall of the engine 20, the manual gear shift status MT may be set such that the gear stage is shifted down not only in accordance with a manipulation on the gear shift manipulation part 50 but also automatically in accordance with the rotation speed of the engine 20. In such a case as well, a shift-up of the gear stage in the manual gear shift status MT is implemented only by a manipulation on the gear shift manipulation part 50.

In the manual gear shift status MT, the gear stage of the stepped transmission 40 is electrically switched. Both in the manual gear shift status MT and in the automatic gear shift status **AT,** the clutch 90 operates in sync with switching of the gear stage in the stepped transmission 40. Thus, the rider does not directly manipulate the clutch 90. The leaning vehicle 1 has no clutch lever. The manual gear shift status MT in this embodiment may sometimes be called a semi-automatic gear shift status. That is, a manual gear shift in this embodiment may sometimes be called a semi-automatic gear shift. Herein, however, a status in which the gear stage is switched in accordance with a manipulation will be called the manual gear shift status MT, in comparison with the automatic gear shift status AT in which the gear stage is switched without a gear shift manipulation.

The mode transition manipulation part 70 receives a manipulation for selecting an engine mode. The mode transition manipulation part 70 is disposed in the vehicle body 10. For example, the mode transition manipulation part 70 is a switch disposed at the handlebar of the vehicle body 10. Associated with the engine mode is any of output control characteristics PWR1 to PWR4.

The control device 80 controls the gear shift actuator 41 and the clutch actuator 91. The control device 80 also controls an output of the engine 20 by controlling the degree of opening of a throttle valve disposed in the engine 20, and the fuel supply amount, for example.

The control device 80 switches the gear shift status between the automatic gear shift status AT and the manual gear shift status MT in accordance with a manipulation on the status switch manipulation part 60.

In the automatic gear shift status **AT,** the gear stage is shifted up or down in accordance with the traveling state. The control device 80, in the automatic gear shift status **AT,** causes the gear shift actuator 41 to shift up or down the gear stage of the stepped transmission 40 in accordance with the traveling state. The control device 80, in the automatic gear shift status **AT,** shifts up or down the gear stage based at least on the rotation speed of the engine 20.

The control device 80, in the manual gear shift status MT, shifts up or down the gear stage in accordance with a manipulation on the gear shift manipulation part 50.

The control device 80 selects the engine mode in accordance with a manipulation on the mode transition manipulation part 70. The control device 80, referring to the output control characteristics associated with the selected engine mode, controls an output of the engine 20 based on an accelerator manipulation amount.

FIG. 1(B) is a chart showing engine modes that can be selected in the leaning vehicle of FIG. 1(A).

FIG. 1(B) shows MT engine mode options M11 to M15 in the manual gear shift status MT, and AT engine mode options M21 to M23.

The MT engine mode options M11 to M15 are options selectable in the manual gear shift status MT. Each of the MT engine mode options M11 to M15 is labeled a name for facilitating the rider's grasping a characteristic of that engine mode. The names are "RAIN," "STREET," "SPORT," "CUSTOM-MT1," and "CUSTOM-MT2."

The AT engine mode options M21 to M23 are selectable in the automatic gear shift status AT. Each of the AT engine mode options M21 to M23 is also labeled a name for facilitating the rider's grasping a characteristic of that engine mode. The names are "CUSTOM-AT1," "CUSTOM-AT2," and "CUSTOM-AT3."

The names of the options are not particularly limited, and may be simple ones such as Mode a, Mode b, Mode c, ..., for example.

Any of the output control characteristics PWR1 to PWR4 is associated with each engine mode option. The output control characteristics (PWR1 to PWR4) of the engine 20 are the relationship between the accelerator manipulation amount, which is the amount of manipulation on the accelerator operator 11, and the output of the engine 20. To be more specific, the output control characteristics (PWR1 to PWR4) are output control characteristics on the throttle opening degree and the fuel supply amount in the engine 20 relative to the accelerator manipulation amount. Conditions of the output control characteristics (PWR1 to PWR4) may include not only the accelerator manipulation amount but also, for example, the engine rotation speed, the fuel supply amount, the ignition timing, or the engine torque. The output control characteristics PWR1 to PWR4 have characteristics different from each other. Regarding a specified throttle opening degree, the output control characteristics PWR1 provides the largest output. The output control characteristics PWR4 provides the smallest output.

The PWR4, PWR2, and PWR1 are fixedly associated with "RAIN," "STREET," and "SPORT," respectively. Regarding the engine mode options "CUSTOM...," the rider is allowed to manually pre-set the output control characteristics before traveling.

Here, output control characteristics are not the only one that is associated with the engine mode options. In addition to them, any or a combination of the intensity of intervention of a traction control, the intensity of operation of an engine brake, or the intensity of intervention of an anti-lock brake system may be associated with each engine mode option. The intensity of intervention of the traction control that may be associated is, in more detail, the presence or absence, or the intensity, of anti-skidding for the vehicle body or anti-wheelie (anti-lift). Furthermore, the presence or absence of a functional operation other than the above-mentioned ones, or the degree of the operation, may be associated with each engine mode option.

The control device 80, in the manual gear shift status MT, selects an engine mode from among the MT engine mode options M11 to M15 in accordance with a manipulation on the mode transition manipulation part 70. The control device 80, in the automatic gear shift status AT, selects an engine mode from among the AT engine mode options M21 to M23 in accordance with a manipulation on the mode transition manipulation part 70.

The rider of the leaning vehicle 1 described above can switch between the automatic gear shift status AT and the manual gear shift status MT by manipulating the status switch manipulation part 60. The rider, in the automatic gear shift status AT, can select a desired engine mode from among the AT engine mode options M21 to M23 by manipulating the mode transition manipulation part 70. The rider, in the manual gear shift status MT, can select a desired engine mode from among the MT engine mode options M11 to M15 by manipulating the mode transition manipulation part 70. The rider, in the manual gear shift status MT, can shift up or down the gear stage by manipulating the gear shift manipulation part 50. The gear stage, in the automatic gear shift status AT, is automatically shifted up or down in accordance with the traveling state.

The control device 80, in the automatic gear shift status AT, selects a desired engine mode from among the plural AT engine mode options M21 to M23 in accordance with a manipulation on the mode transition manipulation part 70. The mode transition manipulation part 70 has a single switch, for example. If the mode transition manipulation part 70 is manipulated once, a selection object transitions by one within the AT engine mode options M21 to M23. Each time the mode transition manipulation part 70 is manipulated, the selection object transitions one by one within the AT engine mode options M21 to M23.

The AT engine mode options M21 to M23 are prepared in such a manner that the number of times the mode transition manipulation part 70 needs to be manipulated in order to transition to any of the plural AT engine mode options M21 to M23 is smaller as compared to that in the manual gear shift status MT. In other words, in the manual gear shift status MT, a desired engine mode is selected in accordance with a manipulation on the mode transition manipulation part 70 from among the MT engine mode options M11 to M15, which are larger in number than those of the AT engine mode.

For example, the number of MT engine mode options M11 to M15 shown in FIG. 1(B) is five. In the manual gear shift status MT, therefore, to select an engine mode that the rider is desiring, a manipulation for selecting needs to be performed four times at the most. For example, in a case where the MT engine mode option M11, "RAIN," is selected, the mode transition manipulation part 70 is manipulated four times, so that the MT engine mode option M15, "CUSTOM-MT2," then becomes selected.

In the automatic gear shift status AT of the leaning vehicle 1, too, it is possible to select an engine mode that complies with traveling environments and a rider's request. The number of AT engine mode options M21 to M23 shown in FIG. 1(B) is three. In the automatic gear shift status AT, therefore, to select an engine mode that the rider is desiring to effectuate by mode changing, the number of times a manipulation for selecting needs to be performed is one at the most. Thus, in the automatic gear shift status AT, changing to a desired engine mode can be achieved by one-time manipulation. For example, in a case where the AT engine mode option M21, "CUSTOM-AT1," is selected, the mode transition manipulation part 70 is manipulated once, so that the AT engine mode option M22, "CUSTOM-AT2," then becomes selected.

The MT engine mode options M11 to M15 include the options M14, M15, which correspond to "CUSTOM-MT1" and "CUSTOM-MT2," respectively. Associated with these options M14, M15 are output control characteristics that are picked out from among plural potential output control characteristics PWR1 to PWR4 by a rider's pre-seting manipulation. The AT engine mode options M21 to M23 include options M21 to M23, which correspond to "CUSTOM-AT1," "CUSTOM-AT2," and "CUSTOM-AT3," respectively. Associated with these options M21 to M23 are also output control characteristics that are picked out from among plural potential output control characteristics PWR2 to PWR4.

The selection of the output control characteristics is implemented by a rider's pre-setting manipulation, which is performed before the leaning vehicle 1 travels. The pre-setting manipulation is carried out through, for example, a manipulation on a switch disposed in a meter indicator. The pre-setting manipulation is not particularly limited, and may be carried out through, for example, a manipulation on a portable terminal capable of communication with the control device 80. It may be possible that the pre-setting manipulation is performed to associate, with the above-described options, the intensity of intervention of the traction control, the intensity of operation of the engine brake, or the intensity of intervention of the anti-lock brake system, or a combination of the intensity of intervention of the traction control, the intensity of operation of the engine brake, or the intensity of intervention of the anti-lock brake system with the output control characteristics.

There are many variations of potential output control characteristics. In addition, potential output control characteristics are associated as a complicated condition in combination with the intensity of intervention of the traction control or with the intensity of operation of the engine brake. Therefore, association of output control characteristics that are picked out from among the plural potential output control characteristics PWR1 to PWR4 with the options M14, M15 or with the options M21 to M23 is carried out in accordance with a manipulation on plural switches, for example.

The control device 80 associates, with the two options M14, M15 belonging to the five MT engine mode options M11 to M15, output control characteristics that are picked out by a rider's manipulation from among the plural potential output control characteristics PWR1 to PWR4. The control device 80 also associates, with all of the options M21 to M23 belonging to the three AT engine mode options M21 to M23, output control characteristics that are picked out by a rider's manipulation from among the plural potential output control characteristics PWR2 to PWR4. For example, characteristics of another type than the output control characteristics may be adopted as additional characteristics associated with the MT engine mode options M11 to M15 and the AT engine mode options M21 to M23. In this case, for example, a situation can occur in which the same parameter is adopted as output control characteristics associated with plural options out of the AT engine mode options M21 to M23 corresponding to "CUSTOM-ATx" while different parameters are adopted as additional characteristics associated with the plural options out of the AT engine mode options M21 to M23 corresponding to "CUSTOM-ATx." In this situation, it can occur that each time an engine mode is selected from among the AT engine mode options M21 to M23 one after another, the output control characteristics remain unchanged while only the additional characteristics other than the output control characteristics change. The same is true for the MT engine mode options M14 to M15 corresponding to "CUSTOM-MTx," for example.

It therefore is possible that output control characteristics that are close to traveling environments and a rider's request are selected in advance as an engine mode with plural MT engine mode options and an engine mode with plural AT engine mode options M21 to M23. Accordingly, both in the manual gear shift status MT and in the automatic gear shift status AT, output control characteristics that are picked out from among a variety of potential output control characteristics can be options to be selected as the engine mode actually applied. Even though the engine mode is selected from the limited options of the AT engine mode options M21 to M23, output control characteristics that are picked out from among a variety of potential output control characteristics PWR2 to PWR4 can be options to be selected as the engine mode. Consequently, driving characteristics that more finely respond to the traveling environments and the rider's request can be provided.

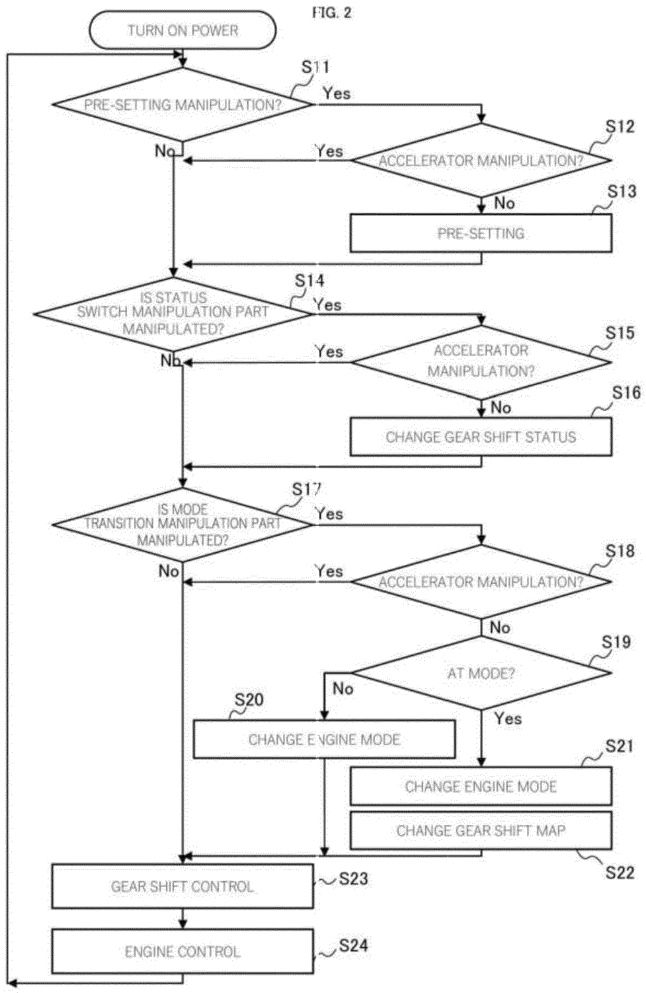

FIG. 2 is a flowchart illustrating a process by the control device.

The control device 80, upon turn-on of the power, executes a control process. The turn-on of the power is carried out through a manipulation on a main switch, for example. The process of FIG. 2 is repeatedly executed until the power is shut off.

If there is a pre-setting manipulation (S11: Yes), the control device 80 executes pre-setting (S13). More specifically, if there is a pre-setting manipulation (S11: Yes) and no accelerator manipulation is performed (S12: No), the pre-setting is executed (S13).

In the pre-setting, the control device 80 associates, with each of the MT engine mode options M14, M15 corresponding to "CUSTOM...," output control characteristics (PWR1 to PWR4) that meet a preference of the rider. Associated and stored are the output control characteristics picked out by the pre-setting manipulation from among the potential output control characteristics PWR1 to PWR4.

The control device 80 also associates, with each of the AT engine mode options M21 to M23 corresponding to "CUSTOM...," output control characteristics (PWR2 to PWR4) that meet a preference of the rider.

If the status switch manipulation part 60 is manipulated (S14: Yes), the control device 80 changes the gear shift status (S16). More specifically, if the status switch manipulation part 60 is manipulated (S14: Yes) and no accelerator manipulation is performed (S15: No), the control device 80 changes the gear shift status (S16). Each time the status switch manipulation part 60 is manipulated, the control device 80 switches between the manual gear shift status MT (MT mode) and the automatic gear shift status AT (AT mode).

If the mode transition manipulation part 70 is manipulated (S17: Yes), the control device 80 changes the engine mode (S19 to S21). More specifically, if the mode transition manipulation part 70 is manipulated (S17: Yes) and no accelerator manipulation is performed (S18: No), the control device 80 changes the engine mode (S19 to S21). In a case of the manual gear shift status MT (MT mode) (S19: No); each time the mode transition manipulation part 70 is manipulated, setting of the engine mode transitions from the MT engine mode option M11 to the MT engine mode option M15 in this order (S20). The control device 80 changes the engine mode to a selected one of the MT engine mode options M11 to M15. In a case of the automatic gear shift status AT (S19: Yes); each time the mode transition manipulation part 70 is manipulated, the control device 80 makes the engine mode setting transition from the AT engine mode option M21 to the AT engine mode option M23 in this order. The control device 80 changes the engine mode to a selected one of the AT engine mode options M21 to M23. In the case of the automatic gear shift status AT (S19: Yes), the control device 80 changes a gear shift map, which is a condition for changing the gear stage in the automatic gear shift status AT, in accordance with the engine mode selected in accordance with the manipulation on the mode transition manipulation part 70 (S22). In this embodiment, the change of the gear shift map may not always need to be carried out. Details of a case where the gear shift map is changed will be described later in another embodiment.

The control device 80 executes a gear shift control (S23). In the case of the manual gear shift status MT, the control device 80 discontinues an automatic gear shift. In this case, the control device 80 shifts up or down the gear stage in accordance with a manipulation on the gear shift manipulation part 50. In the case of the automatic gear shift status AT (AT mode), on the other hand, the control device 80 carries out the automatic gear shift. That is, the control device 80 shifts up or down the gear stage in accordance with the traveling state. In this case, the control device 80 shifts up or down the gear stage if, for example, the engine rotation speed and the throttle opening degree fulfill a predetermined condition.

The control device 80 executes an engine control (S24). The control device 80 controls an output of the engine 20 based on the accelerator manipulation amount and with reference to the output control characteristics associated with the engine mode selected in the above-described steps S20, S21. More specifically, the control device 80 controls the throttle opening degree, the fuel supply amount, and the ignition timing in the engine 20, based on the accelerator manipulation amount. In this case, not only the accelerator manipulation amount but also, for example, the engine rotation speed, the fuel supply amount, the ignition timing, or the engine torque may be included as the condition for the control device 80.

In the leaning vehicle 1 according to this embodiment, the gear shift status of the stepped transmission 40 is switched between the automatic gear shift status AT and the manual gear shift status MT in accordance with a manipulation on the status switch manipulation part 60. The engine mode, with which the output control characteristics (PWR1 to PWR4) of the engine 20 are associated, is selected in accordance with a manipulation on the mode transition manipulation part 70.

In the automatic gear shift status AT, the number of times the manipulation needs to be performed in order to transition to any of the AT engine mode options M21 to M23 is smaller as compared to a case of transitioning to any of the MT engine mode options M11 to M15 in the manual gear shift status MT.

Accordingly, the leaning vehicle 1, in the manual gear shift status MT in which the rider seeks a positive gear shift manipulation, can switch the gear stage so as to finely respond to traveling environments and a rider's request, and also can travel with the engine 20 having the output control characteristics (PWR1 to PWR4) that finely respond to the rider's request. Moreover, the leaning vehicle 1, in the automatic gear shift status AT in which the gear shift manipulation can be omitted, can select for the engine 20 the output control characteristics (PWR2 to PWR4) that are close to a rider's request, while suppressing the amount of manipulation.

Consequently, it is possible to provide driving characteristics that respond more finely to the traveling environments and the rider's request in the manual gear shift status MT, and at the same time provide driving characteristics that are close to a request while suppressing the manipulation amount in the automatic gear shift status AT.

The flow in FIG. 2 shows the pre-setting (S13), the change of the gear shift status (S16), the change of the engine mode (S20, S21), the gear shift control (S23), and the engine control (S24) in this sequence; however, these processes may be in any order. The control device 80, for example, is executing an operating system or a higher-order routine, and may repeatedly invoke the foregoing processes, which are coded as tasks or subroutines, to execute these processes.

The number of MT engine mode options and the number of AT engine mode options are not limited to the ones illustrated in this embodiment.

### [Second Embodiment]

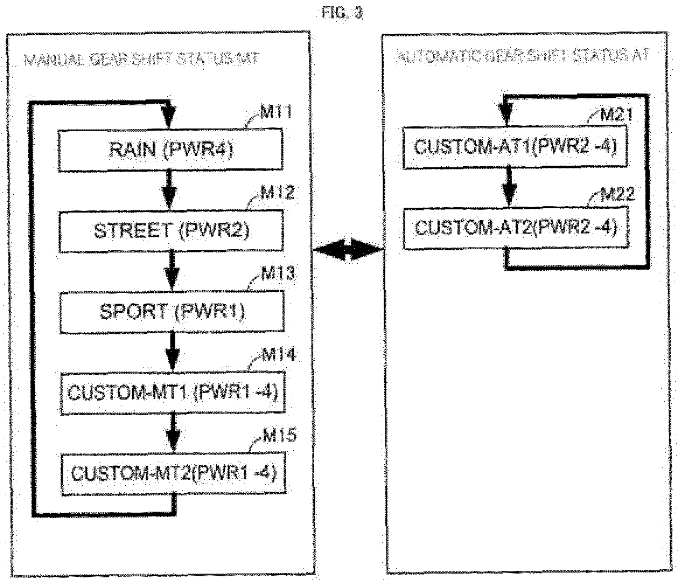

FIG. 3 is a chart showing engine modes that can be selected in a leaning vehicle according to second embodiment.

A control device 80 included in a leaning vehicle 1 according to this embodiment has two AT engine mode options M21, M22. Their names are "CUSTOM-AT1" and "CUSTOM-AT2."

The control device 80 according to this embodiment, in an automatic gear shift status AT, selects an engine mode from among the two AT engine mode options M21, M22 in accordance with a manipulation on a mode transition manipulation part 70.

In this embodiment, when a rider desires to change the engine mode in the automatic gear shift status AT, a transition to a desired engine mode can be made by manipulating the mode transition manipulation part 70 only once. Accordingly, driving characteristics that are close to a request can be provided while the manipulation amount is further suppressed in the automatic gear shift status AT in which the rider seeks to omit a manipulation.

The other configurations and operations in this embodiment are identical to those in the first embodiment. Thus, configurations corresponding to those of the first embodiment will be given the same reference signs as in the first embodiment, and will not be illustrated or described.

### [Third Embodiment]

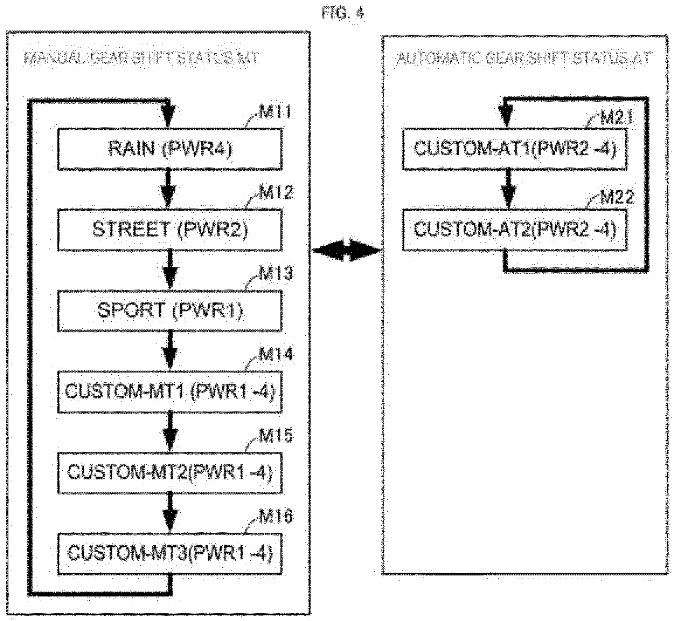

FIG. 4 is a chart showing engine modes that can be selected in a leaning vehicle according to third embodiment.

A control device 80 included in a leaning vehicle 1 according to this embodiment has six MT engine mode options M11 to M16. The leaning vehicle 1 of this embodiment can provide driving characteristics that are close to a rider's request with a higher accuracy.

The number of AT engine mode options M21, M22 is 1/3 of the number of MT engine mode options M11 to M16.

The leaning vehicle 1, which is configured to travel in a wide variety of traveling environments, is often configured to have many MT engine mode options M11 to M16. Such a leaning vehicle 1 is desirably designed to travel in a wide variety of traveling environments even in an automatic gear shift status AT in which a rider seeks to omit a manipulation.

The leaning vehicle 1 of this embodiment has the AT engine mode options M21, M22, the number of which is less than the number of MT engine mode options M11 to M16 and not less than 1/3 of the number of MT engine mode options M11 to M16. This can, while allowing the omission of a manipulation, provide driving characteristics that are close to a rider's request with a higher accuracy, for traveling in a wide variety of traveling environments.

The other configurations and operations in this embodiment are identical to those in the second embodiment. Thus, configurations corresponding to those of the second embodiment will be given the same reference signs as in the second embodiment, and will not be illustrated or described.

### [Fourth Embodiment]

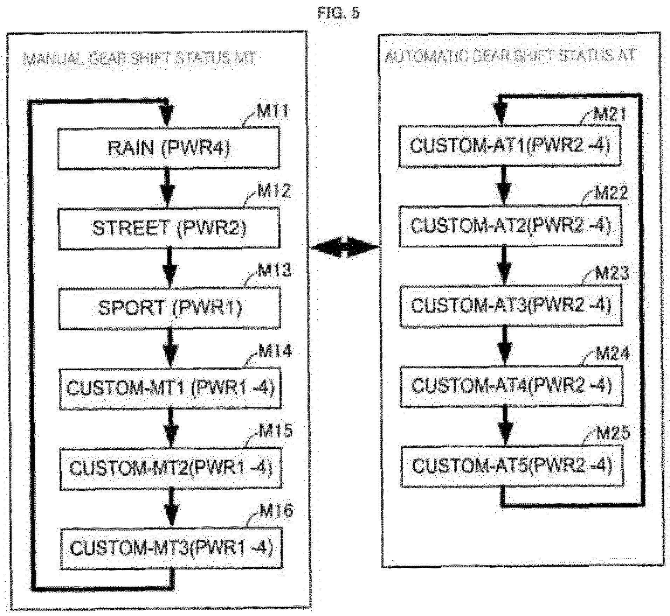

FIG. 5 is a chart showing engine modes that can be selected in a leaning vehicle according to fourth embodiment.

FIG. 5 is different from FIG. 4 in that three AT engine mode options M23 to M25 are additionally provided.

A control device 80 included in a leaning vehicle 1 according to this embodiment has five AT engine mode options M21 to M25. Thus, the leaning vehicle 1 can be designed to travel in a wider variety of traveling environments even in an automatic gear shift status AT.

The number of AT engine mode options M21 to M25 is less than the number of MT engine mode options M11 to M16. A difference between the number of AT engine mode options M21 to M25 and the number of MT engine mode options M11 to M16 is 1/6 of the number of MT engine mode options M11 to M16.

Since the difference between the number of AT engine mode options M21 to M25 and the number of plural MT engine mode options M11 to M16 is 1/6 or more, a design can be made that allows traveling in a wider variety of traveling environments even in the automatic gear shift status AT. In addition, it is easy for the rider to grasp that the burden of the manipulation for the selection is reduced in the automatic gear shift status AT as compared to in the manual gear shift status MT.

The other configurations and operations in this embodiment are identical to those in the third embodiment. Thus, configurations corresponding to those of the third embodiment will be given the same reference signs as in the third embodiment, and will not be illustrated or described.

### [Fifth Embodiment]

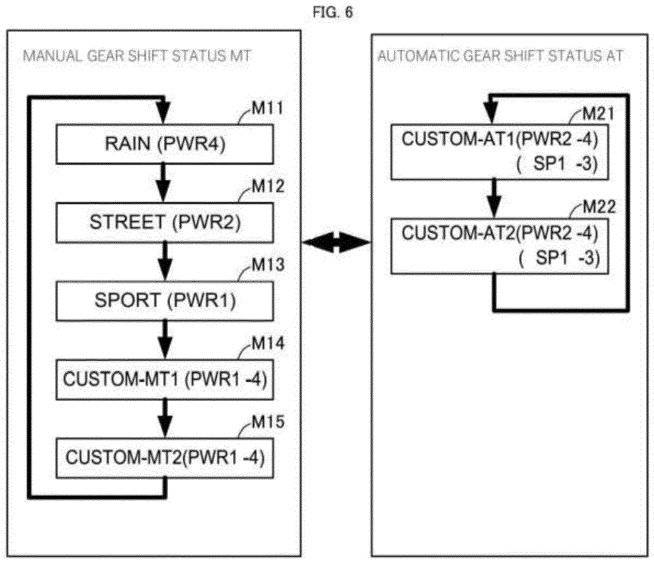

FIG. 6 is a chart showing engine modes that can be selected in a leaning vehicle according to fifth embodiment.

FIG. 6 is different from FIG. 3 in that a gear shift map is additionally provided as characteristics to be associated with each of the AT engine mode options M21 to M22.

The gear shift map, which is a condition for changing the gear stage in automatic gear shifting, is associated with each of the AT engine mode options M21 to M22. The gear shift map is a reference point at which the gear stage changes in traveling environments. The traveling environments at least include the rotation speed of the engine 20 or the rotation speed of a component part that rotates in conjunction with the engine 20. The traveling environments are, for example, the engine 20 and the accelerator manipulation amount. More specifically, the gear shift map that is set is a group of speed conditions such as a rotation speed at which a change from the first gear to the second gear takes place, a rotation speed at which a change from the second gear to the third gear takes place, ..., and a rotation speed at which a change from the fifth gear to the sixth gear takes place.

For example, associated with each of the AT engine mode options M21 to M22 is any of plural potential speed condition groups, that is, any of plural groups of potential gear shift maps SP1 to SP3. For example, the potential gear shift map SP1 is a group of speed conditions in which a change of the gear stage takes place at a higher rotation speed as compared to the other potential gear shift maps SP2, SP3. Therefore, when the potential gear shift map SP1 is set, the gear stage is switched at a relatively high rpm. The stepped transmission 40 is likely to output a higher torque.

The control device 80 sets the gear shift map, which is the condition for changing the gear stage in the automatic gear shift status AT, in accordance with the engine mode that is selected in accordance with a manipulation on the mode transition manipulation part 70. Accordingly, a manipulation on the mode transition manipulation part 70 causes a change of the gear shift map as well as a change of the engine mode.

In addition, for example, there can be a case where output control characteristics having the same parameter are associated with plural options out of the AT engine mode options M21 to M23, while gear shift maps having different parameters are associated with the plural options. In such a case, it can occur that when the engine mode is selected from among the AT engine mode options M21 to M23 one after another, the output control characteristics remain unchanged while the gear shift map changes.

It therefore is possible to provide driving characteristics that further finely respond to the traveling environments and the rider's request, including so-called shift characteristics, in the automatic gear shift status AT.

The other configurations and operations in this embodiment are identical to those in the second embodiment. Thus, configurations corresponding to those of the second embodiment will be given the same reference signs as in the second embodiment, and will not be illustrated or described.

The configuration of this embodiment is applicable to the above-described first, second, third, and fourth embodiments, and to a combination of them.

### [Sixth Embodiment]

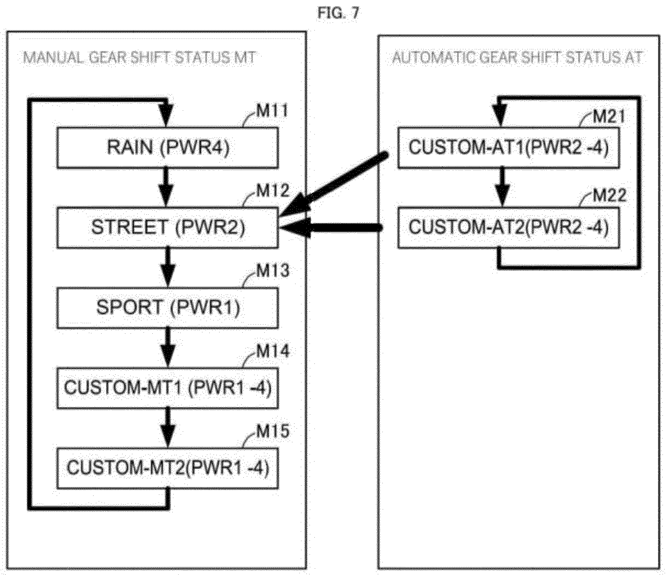

FIG. 7 is a chart showing engine modes that can be selected in a leaning vehicle according to sixth embodiment.

A control device 80 according to this embodiment, when switching the gear shift status from the automatic gear shift status AT to the manual gear shift status MT, constrains the engine mode to, from among the MT engine mode options M11 to M15 selectable in the manual gear shift status MT, an option excluding the engine mode option M13 with which the output control characteristics PWR1 are associated. The output control characteristics PWR1 are characteristics that give the largest output.

In the example shown in FIG. 7, the control device 80 constrains the engine mode to, as an option excluding the engine mode option M13, the engine mode option M12 with which the output control characteristics PWR2 are associated.

Referring to the flowchart of FIG. 2, when switching the gear shift status from the automatic gear shift status AT to the manual gear shift status MT in step S16, the control device 80 constrains the engine mode to the engine mode option M12.

In this embodiment, the gear shift status switches from the automatic gear shift status AT to the manual gear shift status MT, so that a situation can be suppressed in which the engine output characteristics are set to the output control characteristics PWR1, which give the largest output.

The other configurations and operations in this embodiment are identical to those in the second embodiment. Thus, configurations corresponding to those of the second embodiment will be given the same reference signs as in the second embodiment, and will not be illustrated or described.

The configuration of this embodiment is applicable to the above-described first, second, third, fourth, and fifth embodiments, and to a combination of them.

### [Seventh Embodiment]

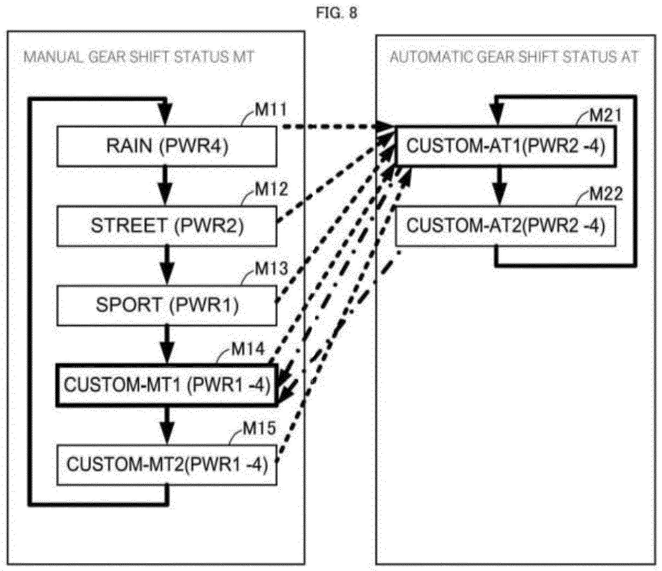

FIG. 8 is a chart showing engine modes that can be selected in a leaning vehicle according to seventh embodiment.

A control device 80 included in a leaning vehicle 1 according to this embodiment, after turn-on of the power, in the automatic gear shift status AT, stores a high frequency AT mode, which is a mode out of plural AT engine mode options M21, M22 that is most frequently used.

Upon the automatic gear shift status AT being selected for the first time after turn-on of the power, the control device 80 selects the stored high frequency AT mode as an initial value of the engine mode.

For example, in the example shown in FIG. 8, the AT engine mode option M21 is stored as the high frequency AT mode having a high frequency of use. The frequency of use is determined based on, as a reference, a usage time for example. The frequency of use is not limited to this, and may be determined based on, as a reference, the number of times it is selected by a manipulation, for example.

Upon the automatic gear shift status AT being selected for the first time after turn-on of the power, the control device 80 selects the AT engine mode option M21, which is the stored high frequency AT mode, as an initial value of the engine mode. For example, upon a change from the manual gear shift status MT to the automatic gear shift status AT taking place for the first time after turn-on of the power, the AT engine mode option M21 is selected, as indicated by the broken lines in FIG. 8.

The control device 80, in the manual gear shift status MT, stores a high frequency MT mode, which is a mode out of plural MT engine mode options M11 to M15 that is most frequently used, and upon the manual gear shift status MT being selected for the first time after turn-on of the power, selects the stored high frequency MT mode as an initial value of the engine mode.

For example, in the example shown in FIG. 8, the MT engine mode option M14 is stored as the high frequency MT mode having a high frequency of use.

Upon the manual gear shift status MT being selected for the first time after turn-on of the power, the control device 80 selects the MT engine mode option M14, which is the stored high frequency MT mode, as an initial value of the engine mode. For example, upon a change from the automatic gear shift status AT to the manual gear shift status MT taking place for the first time after turn-on of the power, the MT engine mode M14 is selected as indicated by the alternate long and short dash lines in FIG. 8.

Referring to the flowchart of FIG. 2, the control device 80, in steps S20, S21, stores a mode having the highest frequency of use as the high frequency AT mode or as the high frequency MT mode. The storing is held after the power is shut off.

In the selection at step 17, the control device 80, upon the automatic gear shift status AT being selected for the first time after turn-on of the power, selects the stored high frequency AT mode as an initial value of the engine mode. The control device 80, upon the manual gear shift status MT being selected for the first time after turn-on of the power, selects the stored high frequency MT mode as an initial value of the engine mode.

If an initial gear shift status after turn-on of the power is the automatic gear shift status AT, the control device 80 selects the stored high frequency AT mode as an initial value of the engine mode. If an initial gear shift status after turn-on of the power is the manual gear shift status MT, the control device 80 selects the stored high frequency MT mode as an initial value of the engine mode.

Upon the automatic gear shift status AT being selected for the first time after turn-on of the power, an engine mode most frequently used in previous drivings actually performed is set as an initial value, and therefore it is possible to provide driving characteristics that are close to a rider's request, while providing more suppression of the rider's manipulation amount. Upon the manual gear shift status MT being selected for the first time after turn-on of the power, an engine mode most frequently used in previous drivings actually performed is set as an initial value, and therefore it is possible to provide driving characteristics that are close to a rider's request, while providing more suppression of the rider's manipulation amount.

The other configurations and operations in this embodiment are identical to those in the second embodiment. Thus, configurations corresponding to those of the second embodiment will be given the same reference signs as in the second embodiment, and will not be illustrated or described.

The configuration of this embodiment is applicable to the above-described first, second, third, fourth, and fifth embodiments, and to a combination of them.

### Reference Signs List

- 1: : leaning vehicle
- 10: : vehicle body
- 20: : engine
- 40: : stepped transmission
- 41: : gear shift actuator
- 50: : gear shift manipulation part
- 60: : status switch manipulation part
- 70: : mode transition manipulation part
- 80: : control device
- AT: : automatic gear shift status
- M11-M16: : MT engine mode option
- M21-M25: : AT engine mode option
- PWR1 to PWR4: : output control characteristics (potential)

## Claims

1. A leaning vehicle (1) comprising:
a vehicle body (10);
an engine (20) disposed in the vehicle body (10);
a stepped transmission (40) having plural gear stages, which are selectable, the stepped transmission (40) being configured to change a rotation speed outputted from the engine (20) in accordance with a selected gear stage;
a gear shift actuator (41) configured to cause the stepped transmission (40) to change the gear stage;
a gear shift manipulation part (50) disposed in the vehicle body (10), the gear shift manipulation part (50) being configured to receive a manipulation for selecting a gear stage;
a status switch manipulation part (60) disposed in the vehicle body (10), the status switch manipulation part (60) being configured to receive a manipulation for switching a gear shift status; and
a control device (80) configured to switch the gear shift status of the leaning vehicle (1) between an automatic gear shift status and a manual gear shift status in accordance with a manipulation on the status switch manipulation part (60), the control device (80) being configured to, in the automatic gear shift status, cause the gear shift actuator (41) to shift up or down the gear stage of the stepped transmission (40) in accordance with a traveling state, and in the manual gear shift status, shift up or down the gear stage in accordance with a manipulation on the gear shift manipulation part (50),
the leaning vehicle (1) including a mode transition manipulation part (70) disposed in the vehicle body (10), the mode transition manipulation part (70) being configured to receive a manipulation for selecting an engine mode with which an output control characteristic of the engine (20) is associated,
the control device (80) being configured to select the engine mode in accordance with a manipulation on the mode transition manipulation part (70), the engine mode associated with the output control characteristic, the control device (80) being configured to, in the manual gear shift status, select the engine mode from among plural selectable MT engine mode options (M11 to M15) while a transition from one to another of the plural selectable MT engine mode options is taking place in accordance with a manipulation on the mode transition manipulation part (70), and in the automatic gear shift status in which the gear stage is shifted up or down in accordance with the traveling state, select the engine mode from among plural AT engine mode options (M21 to M23) while a transition from one to another of the plural AT engine mode options is taking place in accordance with a manipulation on the mode transition manipulation part (70), the plural AT engine mode options (M21 to M23) being prepared in such a manner that the number of times a manipulation needs to be performed in order to transition to any of the plural AT engine mode options (M21 to M23) is smaller as compared to that in the manual gear shift status.

2. The leaning vehicle (1) according to claim 1, wherein the control device (80), in the automatic gear shift status, being configured to select the engine mode from among the plural AT engine mode options (M21 to M23) in accordance with a manipulation on the mode transition manipulation part (70), the number of the plural AT engine mode options (M21 to M23) being not less than 1/3 of the number of the plural MT engine mode options (M11 to M15), the number of the plural AT engine mode options (M21 to M23) being different from the number of the plural MT engine mode options (M11 to M15) by not less than 1/6 of the number of the plural MT engine mode options (M11 to M15).

3. The leaning vehicle (1) according to claim 1 or 2, wherein the control device (80) being configured to associate, with at least one option belonging to plural MT engine mode options (M11 to M15) and with at least one option belonging to plural AT engine mode options (M21 to M23), output control characteristics that are picked out by a rider's manipulation from among plural potential output control characteristics each corresponding to each of different control characteristics.

4. The leaning vehicle (1) according to any one of claims 1 to 3, wherein the control device (80) being configured to change a gear shift map in accordance with the engine mode that is selected in accordance with a manipulation on the mode transition manipulation part (70) in the automatic gear shift status, the gear shift map being a condition for causing the gear shift actuator (41) to change the gear stage of the stepped transmission (40) in the automatic gear shift status.

5. The leaning vehicle (1) according to any one of claims 1 to 4, wherein the control device (80), in the automatic gear shift status, being configured to select the engine mode from among two AT engine mode options (M21 to M23) in accordance with a manipulation on the mode transition manipulation part (70).

6. The leaning vehicle (1) according to any one of claims 1 to 5, wherein the control device (80), when switching the gear shift status of the leaning vehicle (1) from the automatic gear shift status to the manual gear shift status in accordance with a manipulation on the status switch manipulation part (60), being configured to constrain the engine mode to, from among plural MT engine mode options (M11 to M15) selectable in the manual gear shift status, an option excluding an option with which output control characteristics that give the largest output are associated.

7. The leaning vehicle (1) according to any one of claims 1 to 6, wherein the control device (80), in the automatic gear shift status, being configured to store a high frequency AT mode having the highest frequency of use among the plural AT engine mode options (M21 to M23), and upon the automatic gear shift status being selected for the first time after turn-on of power, being configured to select the stored high frequency AT mode as an initial value of the engine mode.

8. The leaning vehicle (1) according to any one of claims 1 to 7, wherein the control device (80), in the manual gear shift status, being configured to store a high frequency MT mode having the highest frequency of use among the plural MT engine mode options (M11 to M15), and upon the manual gear shift status being selected for the first time after tum-on of power, being configured to select the stored high frequency MT mode as an initial value of the engine mode.

9. A method for controlling a leaning vehicle (1) having a vehicle body (10), an engine (20) disposed in the vehicle body (10), a stepped transmission (40) having plural gear stages, which are selectable, the stepped transmission (40) being configured to change a rotation speed outputted from the engine (20) in accordance with a selected gear stage, a gear shift actuator (41) configured to cause the stepped transmission (40) to change the gear stage, a gear shift manipulation part (50) disposed in the vehicle body (10), the gear shift manipulation part (50) being configured to receive a manipulation for selecting a gear stage, a status switch manipulation part (60) disposed in the vehicle body (10), the status switch manipulation part (60) being configured to receive a manipulation for switching a gear shift status, and
a mode transition manipulation part (70) disposed in the vehicle body (10), the mode transition manipulation part (70) being configured to receive a manipulation for selecting an engine mode with which an output control characteristic of the engine (20) is associated,
the method comprises:
switching the gear shift status of the leaning vehicle (1) between an automatic gear shift status and a manual gear shift status in accordance with a manipulation on the status switch manipulation part (60),
in the automatic gear shift status, causing the gear shift actuator (41) to shift up or down the gear stage of the stepped transmission (40) in accordance with a traveling state, and in the manual gear shift status, shifting up or down the gear stage in accordance with a manipulation on the gear shift manipulation part (50),
selecting the engine mode in accordance with a manipulation on the mode transition manipulation part (70), the engine mode associated with the output control characteristic,
in the manual gear shift status, selecting the engine mode from among plural selectable MT engine mode options (M11 to M15) while a transition from one to another of the plural selectable MT engine mode options is taking place in accordance with a manipulation on the mode transition manipulation part (70), and in the automatic gear shift status in which the gear stage is shifted up or down in accordance with the traveling state, selecting the engine mode from among plural AT engine mode options (M21 to M23) while a transition from one to another of the plural AT engine mode options is taking place in accordance with a manipulation on the mode transition manipulation part (70), the plural AT engine mode options (M21 to M23) being prepared in such a manner that the number of times a manipulation needs to be performed in order to transition to any of the plural AT engine mode options (M21 to M23) is smaller as compared to that in the manual gear shift status.

10. The method for controlling a leaning vehicle (1) according to claim 9, wherein, in the automatic gear shift status, selecting the engine mode from among the plural AT engine mode options (M21 to M23) in accordance with a manipulation on the mode transition manipulation part (70), the number of the plural AT engine mode options (M21 to M23) being not less than 1/3 of the number of the plural MT engine mode options (M11 to M15), the number of the plural AT engine mode options (M21 to M23) being different from the number of the plural MT engine mode options (M11 to M15) by not less than 1/6 of the number of the plural MT engine mode options (M11 to M15).

11. The method for controlling a leaning vehicle (1) according to claim 9 or 10, further comprising: associating, with at least one option belonging to plural MT engine mode options (M11 to M15) and with at least one option belonging to plural AT engine mode options (M21 to M23), output control characteristics that are picked out by a rider's manipulation from among plural potential output control characteristics each corresponding to each of different control characteristics.

12. The method for controlling a leaning vehicle (1) according to any one of claims 9 to 11, further comprising: changing a gear shift map in accordance with the engine mode that is selected in accordance with a manipulation on the mode transition manipulation part (70) in the automatic gear shift status, the gear shift map being a condition for causing the gear shift actuator (41) to change the gear stage of the stepped transmission (40) in the automatic gear shift status.

13. The method for controlling a leaning vehicle (1) according to any one of claims 9 to 12, wherein, in the automatic gear shift status, selecting the engine mode from among two AT engine mode options (M21 to M23) in accordance with a manipulation on the mode transition manipulation part (70).

14. The method for controlling a leaning vehicle (1) according to any one of claims 9 to 13, wherein, when switching the gear shift status of the leaning vehicle (1) from the automatic gear shift status to the manual gear shift status in accordance with a manipulation on the status switch manipulation part (60), constraining the engine mode to, from among plural MT engine mode options (M11 to M15) selectable in the manual gear shift status, an option excluding an option with which output control characteristics that give the largest output are associated.

15. The method for controlling a leaning vehicle (1) according to any one of claims 9 to 14, wherein, in the automatic gear shift status, storing a high frequency AT mode having the highest frequency of use among the plural AT engine mode options (M21 to M23), and upon the automatic gear shift status being selected for the first time after turn-on of power, selecting the stored high frequency AT mode as an initial value of the engine mode, and preferably,
in the manual gear shift status, storing a high frequency MT mode having the highest frequency of use among the plural MT engine mode options (M11 to M15), and upon the manual gear shift status being selected for the first time after turn-on of power, selecting the stored high frequency MT mode as an initial value of the engine mode.

## Patentansprüche

1. Ein Neigefahrzeug (1), das umfasst:
einen Fahrzeugkörper (10);
einen Motor (20), der in dem Fahrzeugkörper (10) angeordnet ist;
ein Stufengetriebe (40) mit einer Mehrzahl wählbarer Gangstufen, wobei das Stufengetriebe (40) so konfiguriert ist, dass es eine vom Motor (20) abgegebene Drehzahl entsprechend einer ausgewählten Gangstufe ändert;
einen Gangschaltaktuator (41), der so konfiguriert ist, dass er das Stufengetriebe (40) dazu veranlasst, die Gangstufe zu ändern;
ein Gangschaltbetätigungsteil (50), das im Fahrzeugkörper (10) angeordnet ist, wobei das Gangschaltbetätigungsteil (50) so konfiguriert ist, dass es eine Betätigung zum Auswählen einer Gangstufe empfängt;
ein im Fahrzeugkörper (10) angeordnetes Status-Schalter-Bedienteil (60), wobei das Status-Schalter-Bedienteil (60) so konfiguriert ist, dass es eine Betätigung zum Umschalten eines Gangschaltstatus empfängt; und
eine Steuervorrichtung (80), die so konfiguriert ist, dass sie den Gangschaltstatus des Neigefahrzeugs (1) entsprechend einer Betätigung des Status-Schalter-Bedienteils (60) zwischen einem automatischen Gangschaltstatus und einem manuellen Gangschaltstatus umschaltet, wobei die Steuervorrichtung (80) so konfiguriert ist,
dass sie im automatischen Gangschaltstatus den Gangschaltaktuator (41) veranlasst, die Gangstufe des Stufengetriebes (40) entsprechend einem Fahrzustand hoch- oder herunterzuschalten, und im manuellen Gangschaltstatus die Gangstufe entsprechend einer Betätigung des Gangschaltbetätigungsteils (50) hoch- oder herunterzuschalten, wobei das Neigefahrzeug (1) ein Modusübergangs-Betätigungsteil (70) enthält, der im Fahrzeugkörper (10) angeordnet ist, wobei der Modusübergangs-Betätigungsteil (70) so konfiguriert ist, dass er eine Betätigung zum Auswählen eines Motorbetriebsmodus empfängt, dem eine Leistungssteuercharakteristik des Motors (20) zugeordnet ist,
wobei die Steuervorrichtung (80) so konfiguriert ist, dass sie den Motorbetriebsmodus entsprechend einer Betätigung des Modusübergangs-Betätigungsteils (70) ausgewählt, wobei der Motor-Modus mit der Leistungssteuercharakteristik verbunden ist, wobei die Steuervorrichtung (80) so konfiguriert ist, dass sie im manuellen Gangschaltstatus den Motor-Modus aus der Mehrzahl wählbarer MT-Motor-Modus-Optionen (M11 bis M15) auswählt, während ein Übergang von einer zu einer anderen der Mehrzahl wählbaren MT-Motor-Modus-Optionen gemäß einer Betätigung des Modusübergangs-Betätigungsteils (70) stattfindet,
und im automatischen Gangschaltstatus, in dem die Gangstufe entsprechend dem Fahrzustand hoch- oder heruntergeschaltet wird, den Motorbetrieb aus der Mehrzahl der AT-Motor-Modus-Optionen (M21 bis M23) auszuwählen, während ein Übergang von einer der Mehrzahl der AT-Motor-Modus-Optionen zu einer anderen gemäß einer Betätigung des Modusübergangs-Betätigungsteils (70) stattfindet,
wobei die Mehrzahl der AT-Motor-Modus-Optionen (M21 bis M23) so vorbereitet sind, dass die Anzahl der Bedienungen, die durchgeführt werden müssen, um zu einer der Mehrzahl der AT-Motor-Modus-Optionen (M21 bis M23) zu wechseln, im Vergleich zum manuellen Gangschaltstatus geringer ist.

2. Das Neigefahrzeug (1) gemäß Anspruch 1, wobei die Steuervorrichtung (80) im automatischen Gangschaltstatus so konfiguriert ist, dass sie den Motor-Modus aus der Mehrzahl der AT-Motor-Modus-Optionen (M21 bis M23) entsprechend einer Betätigung des Modusübergangs-Betätigungsteils (70) auswählt, wobei die Anzahl der Mehrzahl der AT-Motor-Modus-Optionen (M21 bis M23) nicht weniger als 1/3 der Anzahl der Mehrzahl MT-Motor-Modus-Optionen (M11 bis M15) beträgt, wobei sich die Anzahl der Mehrzahl AT-Motor-Modus-Optionen (M21 bis M23) um nicht weniger als 1/6 der Anzahl der Mehrzahl MT-Motor-Modus-Optionen (M11 bis M15) abweicht.

3. Das Neigefahrzeug (1) gemäß Anspruch 1 oder 2, wobei die Steuervorrichtung (80) so konfiguriert ist, dass sie zumindest einer Option, die zu einer Mehrzahl von MT-Motor-Modus-Optionen (M11 bis M15) gehört, und zumindest einer Option, die zu einer Mehrzahl von AT-Motor-Modus-Optionen (M21 bis M23) gehört, Ausgangssteuerungseigenschaften zuzuordnen, die durch eine Manipulation des Fahrers aus der Mehrzahl potenzieller Ausgangssteuerungseigenschaften ausgewählt werden, die jeweils einer der verschiedenen Steuerungseigenschaften entsprechen.

4. Das Neigefahrzeug (1) gemäß irgendeinem der Ansprüche 1 bis 3, wobei die Steuervorrichtung (80) so konfiguriert ist, dass sie ein Gangschaltkennfeld entsprechend dem Motor-Modus ändert, der gemäß einer Manipulation an Modusübergangs-Betätigungsteil (70) im automatischen Gangschaltstatus ausgewählt wird, wobei das Gangschaltkennfeld eine Bedingung dafür ist, dass der Gangschaltaktuator (41) die Gangstufe des Stufengetriebes (40) im automatischen Gangschaltstatus ändert.

5. Das Neigefahrzeug (1) gemäß irgendeinem der Ansprüche 1 bis 4, wobei die Steuervorrichtung (80) im automatischen Gangschaltstatus so konfiguriert ist, dass sie den Motorbetrieb aus zwei AT-Motor-Modus-Optionen (M21 bis M23) entsprechend einer Betätigung des Modusübergangs-Betätigungsteils (70) auswählt.

6. Das Neigefahrzeug (1) gemäß irgendeinem der Ansprüche 1 bis 5, wobei die Steuervorrichtung (80) beim Umschalten des Gangschaltzustands des Neigefahrzeugs (1) vom automatischen Gangschaltzustand in den manuellen Gangschaltzustand gemäß einer Betätigung des Status-Schalter-Bedienteils (60) so konfiguriert ist, dass sie den Motorbetrieb auf eine Option aus der Mehrzahl MT-Motor-Modus-Optionen (M11 bis M15), die im manuellen Gangschaltstatus wählbar sind, eine Option einschränkt, die eine Option ausschließt, mit der Ausgangssteuerungseigenschaften verbunden sind, die den größten Ausgang ergeben.

7. Das Neigefahrzeug (1) gemäß irgendeinem der Ansprüche 1 bis 6, wobei die Steuervorrichtung (80) im automatischen Gangschaltstatus so konfiguriert ist, dass er einen Hochfrequenz-AT-Modus mit der höchsten Verwendungsfrequenz unter den mehreren AT-Motor-Modus-Optionen (M21 bis M23) speichert, und so konfiguriert ist, dass er bei der ersten Auswahl des automatischen Gangschaltstatus nach dem Einschalten der Stromversorgung den gespeicherten Hochfrequenz-AT-Modus als Anfangswert des Motormodus auswählt.

8. Das Neigefahrzeug (1) gemäß irgendeinem der Ansprüche 1 bis 7, wobei die Steuervorrichtung (80) im manuellen Gangschaltstatus so konfiguriert ist, dass er einen Hochfrequenz-MT-Modus speichert, der die höchste Verwendungsfrequenz unter den mehreren MT-Motor-Modus-Optionen (M11 bis M15) aufweist, und bei der ersten Auswahl des manuellen Gangschaltstatus nach dem Einschalten der Stromversorgung so konfiguriert ist, dass er den gespeicherten Hochfrequenz-MT-Modus als Anfangswert des Motor-Modus auswählt.

9. Ein Verfahren zum Steuern eines Neigefahrzeugs (1) mit einem Fahrzeugkörper (10), einem in dem Fahrzeugkörper (10) angeordneten Motor (20),
einem Stufengetriebe (40) mit einer Mehrzahl wählbarer Gangstufen, wobei das Stufengetriebe (40) so konfiguriert ist, dass es eine vom Motor (20) abgegebene Drehzahl entsprechend einer ausgewählten Gangstufe ändert, einem Gangschaltaktuator (41), der so konfiguriert ist, dass er das Stufengetriebe (40) dazu veranlasst, die Gangstufe zu ändern, einem in dem Fahrzeugkörper (10) angeordneten Gangschaltbetätigungsteil (50), wobei das Gangschaltbetätigungsteil (50) so konfiguriert ist, dass es eine Betätigung zum Auswählen einer Gangstufe empfängt, ein im Fahrzeugkörper (10) angeordnetes Status-Schalter-Bedienteil (60), wobei das Status-Schalter-Bedienteil (60) so konfiguriert ist, dass es eine Betätigung zum Umschalten eines Gangschaltstatus empfängt, und
einem Modusübergangs-Betätigungsteil (70), das im Fahrzeugkörper (10) angeordnet ist, wobei das Modusübergangs-Betätigungsteil (70) so konfiguriert ist, dass es eine Betätigung zum Auswählen eines Motor-Modus empfängt, dem eine Ausgangssteuercharakteristik des Motors (20) zugeordnet ist,
das Verfahren umfasst:
Umschalten des Gangschaltstatus des Neigefahrzeugs (1) zwischen einem automatischen Gangschaltstatus und einem manuellen Gangschaltstatus gemäß einer Betätigung des Status-Schalter-Bedienteils (60),
im automatischen Gangschaltstatus Veranlassen des Gangschaltaktuators (41), die Gangstufe des Stufengetriebes (40) entsprechend einem Fahrzustand hoch- oder herunterzuschalten, und im manuellen Gangschaltstatus Hochschalten oder Herunterschalten der Gangstufe entsprechend einer Betätigung des Gangschaltbetätigungsteils (50),
Auswählen des Motor-Modus entsprechend einer Betätigung des Modus-Umschalt-Betätigungsteils (70), wobei der Motor-Modus mit der Leistungsregelungscharakteristik verbunden ist,
im manuellen Gangschalt-Status, Auswählen des Motor-Modus aus der Mehrzahl wählbarer MT-Motor-Modus-Optionen (M11 bis M15), während ein Übergang von einer zu einer anderen der Mehrzahl wählbarer MT-Motor-Modus-Optionen entsprechend einer Betätigung des Modus-Umschalt-Betätigungsteils stattfindet (70) stattfindet, und im automatischen Gangschaltstatus, in dem die Gangstufe entsprechend dem Fahrzustand hoch- oder heruntergeschaltet wird, den Motorbetrieb aus der Mehrzahl der AT-Motor-Modus-optionen (M21 bis M23) auswählen, während ein Übergang von einer der Mehrzahl der AT-Motor-Modus-Optionen zu einer anderen entsprechend einer Betätigung des Modusübergangs-Betätigungsteils (70) stattfindet, wobei die Mehrzahl der AT-Motor-Modus-Optionen (M21 bis M23) so vorbereitet sind, dass die Anzahl der Bedienungen, die durchgeführt werden müssen, um zu einer der Mehrzahl der AT-Motor-Modus-Optionen (M21 bis M23) zu wechseln, im Vergleich zum manuellen Gangschaltstatus geringer ist.

10. Das Verfahren zum Steuern eines Neigefahrzeugs (1) gemäß Anspruch 9, wobei im automatischen Gangschaltstatus die Auswahl des Motorbetriebsmodus aus der Mehrzahl der At-Motor-Modus-Optionen (M21 bis M23) gemäß einer Betätigung des Modusübergangs-Betätigungsteils (70) erfolgt, wobei die Anzahl der Mehrzahl der At-Motor-Modus-Optionen (M21 bis M23) nicht weniger als 1/3 der Anzahl der Mehrzahl MT-Motor-Modus-Optionen (M11 bis M15) beträgt, wobei sich die Anzahl der Mehrzahl AT-Motor-Modus-Optionen (M21 bis M23) um nicht weniger als 1/6 der Anzahl der Mehrzahl MT-Motor-Modus-Optionen (M11 bis M15) abweicht.

11. Das Verfahren zum Steuern eines Neigefahrzeugs (1) gemäß Anspruch 9 oder 10, das ferner umfasst: das Zuordnen von Ausgangssteuerungseigenschaften, die durch eine Manipulation des Fahrers aus der Mehrzahl potenzieller Ausgangssteuerungseigenschaften ausgewählt werden, die jeweils unterschiedlichen Steuerungseigenschaften entsprechen, zu zumindest einer Option, die zu mehreren MT-Motor-Modus-Optionen (M11 bis M15) gehört, und zu zumindest einer Option, die zu mehreren AT-Motor-Modus-Optionen (M21 bis M23) gehört.

12. Das Verfahren zum Steuern eines Neigefahrzeugs (1) gemäß irgendeinem der Ansprüche 9 bis 11, das ferner umfasst: Ändern eines Gangschaltkennfelds entsprechend dem Motor-Modus, der gemäß einer Betätigung des Modusübergangs-Betätigungsteils (70) im automatischen Gangschaltstatus ausgewählt wird, wobei die Gangschaltkarte eine Bedingung dafür ist, dass der Gangschaltaktuator (41) die Gangstufe des Stufengetriebes (40) im automatischen Gangschaltstatus ändert.

13. Das Verfahren zum Steuern eines Neigefahrzeugs (1) gemäß irgendeinem der Ansprüche 9 bis 12, wobei im automatischen Gangschaltzustand der Motorbetrieb aus zwei AT-Motor-Modus-Optionen (M21 bis M23) entsprechend einer Betätigung des Modusübergangs-Betätigungsteils (70) ausgewählt wird.

14. Das Verfahren zum Steuern eines Neigefahrzeugs (1) gemäß irgendeinem einer Ansprüche 9 bis 13, wobei beim Umschalten des Gangschaltzustands des Neigefahrzeugs (1) vom automatischen Gangschaltzustand in den manuellen Gangschaltzustand gemäß einer Betätigung an dem Status-Schalter-Bedienteil (60) der Motorbetrieb aus der Mehrzahl der MT-Motor-Modus-Optionen (M11 bis M15), die im manuellen Gangschaltstatus wählbar sind, auf eine Option beschränkt wird, die eine Option ausschließt, mit der Ausgangssteuerungseigenschaften verbunden sind, die den größten Ausgang ergeben.

15. Das Verfahren zum Steuern eines Neigefahrzeugs (1) gemäß irgendeinem der Ansprüche 9 bis 14, wobei im automatischen Gangschaltstatus ein Hochfrequenz-AT-Modus gespeichert wird, der die höchste Verwendungshäufigkeit unter der Mehrzahl der AT-Motor-Modus-Optionen (M21 bis M23) aufweist, und wenn der automatische Gangschaltstatus zum ersten Mal nach dem Einschalten der Stromversorgung ausgewählt wird, der gespeicherte Hochfrequenz-AT-Modus als Anfangswert des Motormodus ausgewählt wird, und vorzugsweise
im manuellen Gangschaltstatus einen Hochfrequenz-MT-Modus speichern, der die höchste Verwendungsfrequenz unter der Mehrzahl der MT-Motor-Modus-Optionen (M11 bis M15) aufweist, und bei erstmaliger Auswahl des manuellen Gangschaltstatus nach dem Einschalten der Stromversorgung den gespeicherten Hochfrequenz-MT-Modus als Anfangswert des Motor-Modus auswählen.

## Revendications

1. Véhicule à inclinaison (1) comprenant:
une carrosserie (10);
un moteur (20) disposé dans la carrosserie (10);
une transmission étagée (40) comportant plusieurs rapports de vitesse sélectionnables, la transmission étagée (40) étant configurée pour modifier la vitesse de rotation fournie par le moteur (20) en fonction du rapport de vitesse sélectionné;
un actionneur de changement de vitesse (41) configuré pour amener la transmission étagée (40) à changer de rapport;
une partie manipulation de changement de vitesse (50) disposée dans la carrosserie du véhicule (10), la partie manipulation de changement de vitesse (50) étant configurée pour réagir à une manipulation afin de sélectionner un rapport de vitesse;
une partie de manipulation de commutateur d'état (60) disposée dans la carrosserie du véhicule (10), la partie de manipulation de commutateur d'état (60) étant configurée pour réagir à une manipulation afin de commuter un mode de changement de vitesse; et
un dispositif de commande (80) configuré pour commuter le mode de changement de vitesse du véhicule incliné (1) entre un changement de vitesse automatique et un changement de vitesse manuel suite à une manipulation de la partie manipulation du commutateur d'état (60), le dispositif de commande (80) étant configuré pour, en cas de changement de vitesse automatique, amener l'actionneur de changement de vitesse (41) à passer à un rapport supérieur ou inférieur de la transmission étagée (40) en fonction d'un état de déplacement, et en cas de changement de vitesse manuel, passer à un rapport supérieur ou inférieur suite à une manipulation de la partie manipulation de changement de vitesse (50),
le véhicule à inclinaison (1) comprenant une partie manipulation de transition de mode (70) disposée dans la carrosserie du véhicule (10), la partie manipulation de transition de mode (70) permettant de gérer une manipulation afin de sélectionner un mode moteur auquel est associée une caractéristique de commande de puissance du moteur (20),
le dispositif de commande (80) étant configuré pour sélectionner le mode moteur suite à une manipulation de la partie manipulation de transition de mode (70), le mode moteur étant associé à la caractéristique de commande de puissance, le dispositif de commande (80) étant configuré pour, en cas de changement de vitesse manuel, sélectionner le mode moteur parmi plusieurs options de mode moteur MT sélectionnables (M11 à M15) tandis qu'une transition d'une option à une autre parmi lesdits plusieurs options de mode moteur MT sélectionnables résulte d'une manipulation de la partie manipulation de transition de mode (70), et en cas de changement de vitesse automatique dans lequel le rapport de vitesse va augmenter ou diminuer selon le mode de déplacement, sélectionner le mode moteur parmi plusieurs options de mode moteur AT (M21 à M23) tandis qu'une transition d'une option à l'autre parmi lesdits plusieurs options de mode moteur AT résulte d'une manipulation de la partie manipulation de transition de mode (70), les multiples options de mode moteur AT (M21 à M23) étant prévues de telle sorte que le nombre de manipulations à effectuer pour passer à l'une quelconque des multiples options de mode moteur AT (M21 à M23) soit inférieur à celui requis en cas de changement de vitesse manuel.

2. Véhicule à inclinaison (1) selon la revendication 1, dans lequel le dispositif de commande (80), en cas de changement de vitesse automatique, est configuré pour sélectionner le mode moteur parmi les multiples options de mode moteur AT (M21 à M23) résultant d'une manipulation de la partie manipulation de transition de mode (70), le nombre des multiples options de mode moteur AT (M21 à M23) n'étant pas inférieur à 1/3 du nombre des multiples options de mode moteur MT (M11 à M15), le nombre des multiples options de mode moteur AT (M21 à M23) étant différent du nombre desdites multiples options de mode moteur MT (M11 à M15) d'au moins 1/6 du nombre desdites multiples options de mode moteur MT (M11 à M15).

3. Véhicule à inclinaison (1) selon la revendication 1 ou 2, dans lequel le dispositif de commande (80) est configuré pour associer, à au moins l'une des options de mode moteur MT multiples (M11 à M15) et à au moins l'une des options de mode moteur AT multiples (M21 à M23), des caractéristiques de commande de puissance qui sont sélectionnées par une manipulation du conducteur parmi plusieurs caractéristiques de commande de puissance potentielles correspondant chacune à chacune des différentes caractéristiques de commande.

4. Véhicule à inclinaison (1) selon l'une quelconque des revendications 1 à 3, dans lequel le dispositif de commande (80) est configuré pour modifier un schéma de changement de vitesses en fonction du mode moteur sélectionné résultant d'une manipulation de la partie manipulation de transition de mode (70) en cas de changement de vitesse automatique, le schéma de changement de vitesse étant une condition nécessaire pour amener l'actionneur de changement de vitesse (41) à changer le rapport de vitesse de la transmission étagée (40) en cas de changement de vitesse automatique.

5. Véhicule à inclinaison (1) selon l'une quelconque des revendications 1 à 4, dans lequel le dispositif de commande (80), en cas de changement de vitesse automatique, est configuré pour sélectionner le mode moteur parmi deux options de mode moteur AT (M21 à M23) en fonction d'une manipulation sur la partie de manipulation de transition de mode (70).

6. Véhicule à inclinaison (1) selon l'une quelconque des revendications 1 à 5, dans lequel le dispositif de commande (80), en passant du mode de changement de vitesse du véhicule à inclinaison (1) du mode de changement de vitesse automatique au changement de vitesse manuel, à la suite d'une manipulation de la partie manipulation de commutation d'état (60), est configuré pour limiter le mode moteur, parmi plusieurs options de mode moteur MT (M11 à M15) pouvant être sélectionnées en cas de changement de vitesse manuel, une option excluant une option à laquelle sont associées des caractéristiques de commande de puissance qui assurent la puissance la plus grande.

7. Véhicule à inclinaison (1) selon l'une quelconque des revendications 1 à 6, dans lequel le dispositif de commande (80), en cas de changement de vitesse automatique, étant configuré pour programmer un mode AT à haute fréquence dont la fréquence d'utilisation est la plus élevée parmi les multiples options de mode moteur AT (M21 à M23), et lorsque le mode changement de vitesse automatique est sélectionné pour la première fois après la mise sous tension, étant configuré pour sélectionner le mode AT à haute fréquence programmé comme valeur initiale du mode moteur.

8. Véhicule à inclinaison (1) selon l'une quelconque des revendications 1 à 7, dans lequel le dispositif de commande (80), en cas de changement de vitesse manuel, étant configuré pour programmer un mode MT à haute fréquence dont la fréquence d'utilisation est la plus élevée parmi les multiples options de mode moteur MT (M11 à M15), et lorsque l'état de changement de vitesse manuel est sélectionné pour la première fois après la mise sous tension, étant configuré pour sélectionner le mode MT à haute fréquence programmé comme valeur initiale du mode moteur.

9. Procédé de commande d'un véhicule à inclinaison (1) comportant une carrosserie (10), un moteur (20) disposé dans la carrosserie (10), une transmission étagée (40) comportant plusieurs rapports de vitesse sélectionnables, la transmission étagée (40) étant configurée pour modifier la vitesse de rotation délivrée par le moteur (20) en fonction du rapport de vitesse sélectionné, un actionneur de changement de vitesse (41) configuré pour amener la transmission étagée (40) à changer de rapport de vitesse, une partie manipulation de changement de vitesse (50) disposée dans la carrosserie (10), la partie manipulation de changement de vitesse (50) étant configurée pour réagir à une manipulation afin de sélectionner un rapport, une partie manipulation de commutateur d'état (60) prévue dans la carrosserie du véhicule (10), la partie manipulation de commutateur d'état (60) étant configurée pour réagir à une manipulation afin de commuter un mode de changement de vitesse, et
une partie manipulation de transition de mode (70) disposée dans la carrosserie du véhicule (10), la partie manipulation de transition de mode (70) étant configurée pour réagir à une manipulation afin de sélectionner un mode moteur auquel est associée une caractéristique de commande de puissance du moteur (20), le procédé comprenant les opérations suivantes:
commuter le mode de changement de vitesse du véhicule incliné (1) entre un mode de changement de vitesse automatique et un mode de changement de vitesse manuel résultant d'une manipulation de la partie manipulation du commutateur d'état (60),
en cas de changement de vitesse automatique, amener l'actionneur de changement de vitesse (41) à passer à un rapport supérieur ou inférieur de la transmission étagée (40) conformément à un état de déplacement, et en cas de changement de vitesse manuel, passer à un rapport supérieur ou inférieur résultant d'une manipulation de la partie manipulation de changement de vitesse (50), sélectionner le mode moteur résultant d'une manipulation de la partie manipulation de transition de mode (70), le mode moteur associé à la caractéristique de commande de puissance,
en mode manuel, sélectionner le mode moteur parmi plusieurs options de mode moteur MT sélectionnables (M11 à M15) pendant une transition d'une option de mode moteur MT sélectionnable à une autre, à la suite d'une manipulation de la partie manipulation de transition de mode (70), et en cas de changement de vitesse automatique dans lequel le rapport de vitesse va augmenter ou diminuer en fonction de l'état de déplacement, sélectionner le mode moteur parmi plusieurs options de mode moteur AT (M21 à M23) pendant qu'une transition d'une option de mode moteur AT à une autre se produit à la suite d'une manipulation de la partie manipulation de transition de mode (70), les multiples options de mode moteur AT (M21 à M23) étant préparées de telle manière que le nombre de fois qu'une manipulation doit être effectuée afin de passer à l'une quelconque des multiples options de mode moteur AT (M21 à M23) est inférieur à celui en cas de changement de vitesse manuel.

10. Procédé de commande d'un véhicule incliné (1) selon la revendication 9, dans lequel, en cas de changement de vitesse automatique, la sélection du mode moteur parmi les multiples options de mode moteur AT (M21 à M23) en fonction d'une manipulation sur la partie de manipulation de transition de mode (70), le nombre des multiples options de mode moteur AT (M21 à M23) n'est pas inférieur à 1/3 du nombre des options de mode moteur MT multiples (M11 à M15), le nombre des options de mode moteur AT multiples (M21 à M23) étant différent du nombre des options de mode moteur MT multiples (M11 à M15) d'au moins 1/6 du nombre des options de mode moteur MT multiples (M11 à M15).

11. Procédé de commande d'un véhicule incliné (1) selon la revendication 9 ou 10, comprenant en outre les opérations suivantes: associer, à au moins l'une des options de mode moteur MT multiples (M11 à M15) et à au moins l'une des options de mode moteur AT multiples (M21 à M23), des caractéristiques de commande de puissance qui sont sélectionnées par la manipulation d'un conducteur parmi plusieurs caractéristiques de commande de puissance possibles correspondant chacune à chacune des différentes caractéristiques de commande.

12. Procédé de commande d'un véhicule incliné (1) selon l'une quelconque des revendications 9 à 11, comprenant en outre: la modification d'un schéma de changement de vitesses en fonction du mode moteur sélectionné résultant d'une manipulation de la partie manipulation de transition de mode (70) en cas de changement de vitesse automatique, le schéma de changement de vitesse étant une condition pour amener l'actionneur de changement de vitesse (41) à changer le rapport de vitesse de la transmission étagée (40) en cas de changement de vitesse automatique.

13. Procédé de commande d'un véhicule incliné (1) selon l'une quelconque des revendications 9 à 12, dans lequel, en cas de changement de vitesse automatique, le mode moteur est sélectionné parmi deux options de mode moteur AT (M21 à M23) suite à une manipulation de la partie manipulation de transition de mode (70).

14. Procédé de commande d'un véhicule incliné (1) selon l'une quelconque des revendications 9 à 13, dans lequel, lors du passage du mode de changement de vitesse du véhicule incliné (1) du mode de changement de vitesse automatique au mode de changement de vitesse manuel suite à une manipulation de la partie manipulation de changement d'état (60), le mode moteur va sélectionner, parmi plusieurs options de mode moteur MT (M11 à M15) sélectionnables en cas de changement de vitesse manuel, une option excluant une option à laquelle sont associées des caractéristiques de commande de puissance produisant la puissance la plus élevée.

15. Procédé de commande d'un véhicule à inclinaison (1) selon l'une quelconque des revendications 9 à 14, dans lequel, en cas de changement de vitesse automatique, on programme un mode AT à haute fréquence dont la fréquence d'utilisation est la plus élevée parmi les multiples options de mode moteur AT (M21 à M23), et lorsque le mode de changement de vitesse automatique est sélectionné pour la première fois après la mise sous tension, sélectionner le mode AT haute fréquence programmé comme valeur initiale du mode moteur, et de préférence, en mode de changement de vitesse manuel, programmer un mode MT haute fréquence ayant la fréquence d'utilisation la plus élevée parmi les multiples options de mode moteur MT (M11 à M15), et lorsque le mode de changement de vitesse manuel est sélectionné pour la première fois après la mise sous tension, sélectionner le mode MT haute fréquence programmé comme valeur initiale du mode moteur.
